# EUROPÄISCHE PATENTSCHRIFT

(11) **EP 2 637 770 B1**
(45) Veröffentlichungstag und Bekanntmachung des Hinweises auf die Patenterteilung: **10.12.2014**
(21) Anmeldenummer: 11770698.6
(22) Anmeldetag: 06.10.2011
(51) Int. Cl.: B01D 61/00, C02F 1/44

(54) **VORWÄRTSOSMOSESYSTEM MIT LÖSUNGSMITTELABTRENNUNG DURCH DESORPTION/ABSORPTION**
FORWARD OSMOSIS SYSTEM HAVING SOLVENT SEPARATION BY MEANS OF DESORPTION/ABSORPTION
SYSTÈME D'OSMOSE DIRECTE À SÉPARATION DE SOLVANT PAR DESORPTION/ABSORPTION

(30) Priorität: 10.11.2010 DE 102010050892
(43) Veröffentlichungstag der Anmeldung: 18.09.2013
(73) Patentinhaber: AAA Water Technologies AG, 6330 Cham (CH)
(72) Erfinder: HEINZL, Wolfgang, 83561 Ramerberg (DE)
(74) Vertreter: Manitz, Finsterwald & Partner GbR
(86) Internationale Anmeldenummer: PCT/EP2011/004988
(87) Internationale Veröffentlichungsnummer: WO 2012/062392

(56) Entgegenhaltungen:
- WO-A1-2005/089914
- WO-A1-2007/147013
- WO-A2-2007/146094
- US-A1- 2006 144 789
- MCCUTCHEON J R ET AL: "A novel ammonia-carbon dioxide forward (direct) osmosis desalination process", DESALINATION, ELSEVIER, AMSTERDAM, NL, Bd. 174, Nr. 1, 1. April 2005 (2005-04-01) , Seiten 1-11, XP004891604, ISSN: 0011-9164, DOI: 10.1016/J.DESAL.2004.11.002

## Beschreibung

Die Erfindung betrifft ein System zur Separation eines in einer aufzuarbeitenden Lösung als Lösungsmittel enthaltenden Produkts. Ein solches System kann beispielsweise zur Meerwasserentsalzung bzw. zur Gewinnung von Trinkwasser aus Meerwasser eingesetzt werden, bei dem es sich in diesem Fall um die aufzuarbeitende Lösung handelt.

Systeme zur Separation eines in einer aufzuarbeitenden Lösung als Lösungsmittel enthaltenen Produkts sind aus den Druckschriften WPO 2007/147013 A1, J. R. McCutcheon, R. L. McGinnis, M. Elimelech: "A novel ammonia-carbon dioxide forward (direct) osmosis desalination process" (erschienen in Desalination, Bd. 174, Nr. 1, 2005, Seiten 1 bis 11), US 2006/0144789 A1 und WO 2007/146094 A2 bekannt.

Ziel der Erfindung ist es, ein verbessertes System der eingangs genannten Art zu schaffen, das bei möglichst einfachem, kompaktem Aufbau eine zuverlässige effiziente Separation gewährleistet.

Erfindungsgemäß wird diese Aufgabe gelöst durch ein System zur Separation eines in einer aufzuarbeitenden Lösung als Lösungsmittel enthaltenen Produkts, mit wenigstens einer von der aufzuarbeitenden Lösung und einer Zuglösung durchströmten Vorwärtsosmoseeinrichtung und einer dieser nachgeschalteten Einrichtung zur Gewinnung des Produkts aus von der Vorwärtsosmoseeinrichtung austretender verdünnter Zuglösung, wobei die Vorwärtsosmoseeinrichtung wenigstens einen die aufzuarbeitende Lösung führenden Strömungskanal und wenigstens einen die Zuglösung führenden Strömungskanal umfasst, der Innenraum eines jeweiligen die aufzuarbeitende Lösung führenden Strömungskanals zumindest teilweise durch eine für das Lösungsmittel der aufzuarbeitenden Lösung, nicht jedoch den darin aufgelösten Stoff durchlässige semipermeable Membranwand begrenzt ist und wenigstens ein die Zuglösung führender Strömungskanal auf einander gegenüberliegenden Seiten durch Membranwände begrenzt ist, die zwei benachbarten die aufzuarbeitende Lösung führenden Strömungskanälen zugeordnet sind, so dass Lösungsmittel aus der aufzuarbeitenden Lösung durch die Membranwände hindurch in die angrenzenden die Zuglösung führenden Strömungskanäle gelangt.

Aufgrund dieser Ausbildung kann das System bei relativ großer Separationsleistung relativ einfach und kompakt gehalten werden. Es kann problemlos insbesondere auch eine größere Anzahl von die aufzuarbeitende Lösung führenden Strömungskanälen und die Zuglösung führenden Strömungskanälen vorgesehen sein, wodurch die Effizienz des Systems entsprechend erhöht wird.

Anders als bei der Umkehrosmose dient bei der Vorwärtsosmose nicht der hydraulische Druck, sondern der osmotische Druckgradient als treibende Kraft für den Transport des Lösungsmittels der aufzuarbeitenden Lösung durch die Membran. Der in der Zuglösung enthaltene aufgelöste Stoff besitzt ein höheres so genanntes osmotisches Potenzial als der in der aufzuarbeitenden Lösung enthaltene aufgelöste Stoff. Ab einer bestimmten Konzentration der Zuglösung ist das osmotische Potenzial auf der Permeatseite stets höher als das osmotische Potenzial auf der Seite der aufzuarbeitenden Lösung, d.h. dem Retentat.

Da der über die Zuglösung aufgebaute Druckgradient größer ist als der hydraulische Druckgradient, wird eine höhere Ausbeute erzielt.

Im Fall eines Einsatzes des Systems zur Meerwasserentsalzung kann insbesondere eine semipermeable Membran eingesetzt werden, die für Wasser, nicht jedoch das Salz durchlässig ist.

Als Vorwärtsosmosemembranen können beispielsweise auch Umkehrosmosemembranen eingesetzt werden.

Als die treibende Kraft für die Vorwärtsosmose liefernde konzentrierte Zuglösung ist die Verwendung von Lösungen denkbar, die sich über den Dampfdruck sowohl trennen als auch regenerieren lassen, wie z.B. Ammoniumhydrogencarbonat in Wasser. So lässt sich beispielsweise Ammoniumhydrogencarbonat in Wasser lösen, wodurch man eine Zuglösung erhält. Erwärmt man diese Lösung, wird gasförmig NH₃ und CO₂ frei. Zurück bleibt reines Wasser.

Bevorzugt durchströmt die Zuglösung die Vorwärtsosmoseeinrichtung im Gegenstrom zur aufzuarbeitenden Lösung. Grundsätzlich sind jedoch auch solche Ausführungen denkbar, bei denen die Zuglösung die Vorwärtsosmoseeinrichtung im Gleichstrom zur aufzuarbeitenden Lösung durchströmt.

Vorteilhafterweise umfasst die Vorwärtsosmoseeinrichtung mehrere zueinander parallele die aufzuarbeitende Lösung führende Strömungskanäle sowie mehrere zueinander parallele die Zuglösung führende Strömungskanäle.

Dabei sind die die Zuglösung führenden Strömungskanäle bevorzugt jeweils auf einander gegenüberliegenden Seiten durch Membranwände begrenzt, die zwei benachbarten die aufzuarbeitende Lösung führenden Strömungskanälen zugeordnet sind.

Eine bevorzugte praktische Ausführungsform des erfindungsgemäßen Systems zeichnet sich dadurch aus, dass die Produktgewinnungseinrichtung eine von der aus der Vorwärtsosmoseeinrichtung austretenden verdünnten Zuglösung durchströmte Heizstufe aufweist, die wenigstens eine Heizeinheit und wenigstens eine Verdampfereinheit umfasst, wobei eine jeweilige Heizeinheit einen zumindest teilweise von einer fluiddichten wärmeleitenden Wand begrenzten Heizfluidraum und eine jeweilige Verdampfereinheit einen zumindest teilweise durch eine dampfdurchlässige flüssigkeitsdichte Membranwand begrenzten Dampfraum umfasst, und in der Heizstufe wenigstens ein zwischen einer Heizeinheit und einer an diese angrenzenden Verdampfereinheit gebildeter, die Zuglösung führender Strömungskanal vorgesehen ist, so dass die Zuglösung über die fluiddichte wärmeleitende Wand beheizt wird und der aus der Zuglösung entstehende Dampf durch die Membranwand hindurch in den Dampfraum gelangt.

Dabei ist von Vorteil, wenn die Produktgewinnungseinrichtung wenigstens eine von der aus der Heizstufe austretenden Zuglösung durchströmte, mit in der Heizstufe anfallendem Dampf versorgte Kondensations-/Verdampfungsstufe aufweist, die wenigstens eine Kondensationseinheit und wenigstens eine Verdampfereinheit umfasst, wobei eine jeweilige Kondensationseinheit einen zumindest teilweise von einer Kondensationswand begrenzten ersten Dampfraum und eine jeweilige Verdampfereinheit einen zumindest teilweise durch eine dampfdurchlässige flüssigkeitsdichte Membranwand begrenzten zweiten Dampfraum umfasst, und in einer jeweiligen Kondensations-/Verdampfungsstufe wenigstens ein zwischen einer solchen Kondensationseinheit und einer solchen an diese angrenzenden Verdampfereinheit gebildeter, die Zuglösung führenden Strömungskanal vorgesehen ist, so dass die Zuglösung über die Kondensationswand erhitzt wird und der aus der Zuglösung entstehende Dampf durch die Membranwand hindurch in den zweiten Dampfraum gelangt, wobei vorzugsweise die aus der letzten Kondensations-/Verdampfungsstufe austretende Zuglösung wieder der Vorwärtsosmoseeinrichtung zugeführt ist.

Von Vorteil ist insbesondere auch, wenn die Produktgewinnungseinrichtung eine Kondensationsstufe mit wenigstens einer Kühleinheit und wenigstens einer Kondensationseinheit umfasst, wobei eine jeweilige Kühleinheit einen vorzugsweise zumindest teilweise von einer fluiddichten wärmeleitenden Wand begrenzten Kühlfluidraum und eine jeweilige Kondensationseinheit einen zumindest teilweise von einer Kondensationswand begrenzten Dampfraum umfasst und in der Kondensationsstufe wenigstens eine Kühleinheit zumindest einer Kondensationseinheit unmittelbar benachbart ist, so dass die Kondensationswand der jeweiligen Kondensationseinheit über die Kühleinheit gekühlt wird, und wobei der Kondensationsstufe vorzugsweise in einer vorangehenden Kondensations-/Verdampfungsstufe entstehender Dampf zugeführt und das Produkt vorzugsweise in Form des in der Kondensationsstufe anfallenden Destillats aus der Kondensationsstufe abführbar ist.

Die Heizstufe kann beispielsweise solar beheizt sein. Eine jeweilige Heizeinheit der Heizstufe kann also beispielsweise von einem solar aufgeheizten Heizfluid durchströmt sein. Die Kondensationsstufe kann beispielsweise mit Kühlwasser gekühlt sein. Das Produkt kann, wie bereits erwähnt, z.B. in Form des in der Kondensationsstufe anfallenden Destillats gewonnen werden.

Umfasst die Produktgewinnungseinrichtung wie zuvor erwähnt eine Heizstufe, wenigstens eine Kondensations-/Verdampfungsstufe und vorzugsweise eine Kondensationsstufe, so befindet sich diese Aufkonzentrationseinrichtung bevorzugt im Unterdruck, das Kühlfluid und das Heizfluid vorzugsweise bei Umgebungsdruck und die Zuglösung vorzugsweise im Unterdruck. In der bzw. den Kondensations-/Verdampfungsstufen und der Heizstufe kann sich die Zuglösung über alle Stufen insbesondere auf der zum Absolutdruck im Dampfraum einer jeweiligen angrenzenden Verdampfereinheit korrespondierenden Siedetemperatur befinden, wie dies in der WO 2007/054311 beschrieben ist, die hiermit in den Offenbarungsgehalt der vorliegenden Anmeldung mit einbezogen wird.

Die aufzuarbeitende Lösung und die Zuglösung können grundsätzlich im Gegenstrom, oder auch im Gleichstrom strömen.

Die Vorwärtsosmoseeinrichtung kann in die aufzuarbeitende Lösung, z.B. Meerwasser, getaucht sein, oder sie kann extern von der aufzuarbeitenden Lösung durchströmt werden. Ist die Vorwärtsosmoseeinrichtung in die aufzuarbeitende Lösung getaucht, so ist zweckmäßigerweise dafür zu sorgen, dass die aufzuarbeitende Lösung zur Vermeidung einer Konzentrationspolarisation an der Membranwand entlang strömt.

Die um das Produkt, z.B. Wasser, verdünnte Zuglösung kann also beispielsweise einem Prozess zur Aufkonzentration zugeführt werden, wie er in der WO 2007/054311 beschrieben ist. Grundsätzlich kann dieser Prozess zur Aufkonzentration insbesondere zur Meerwasserentsalzung beispielsweise jedoch auch durch andere Prozesse wie insbesondere eine Umkehrosmose, einen MSF-Prozess (Multi Stage Flash Evaporation = mehrstufige Entspannungsverdampfung), einen MED-Prozess (Multi-Effekt-Destillation), einen MVC-Prozess (Mechanical Vaper Compression = Entsalzung auf der Grundlage des Verfahrens der Mechanischen Dampfkompression) ersetzt werden.

Erfindungsgemäß weist die Produktgewinnungseinrichtung eine von der aus der Vorwärtsosmoseeinrichtung austretenden verdünnten Zuglösung durchströmte beheizte Desorberstufe auf, die wenigstens einen Gasraum sowie wenigstens einen die verdünnte Zuglösung führenden Strömungskanal umfasst, wobei ein jeweiliger Gasraum zumindest teilweise durch eine dampfdurchlässige flüssigkeitsdichte Membranwand begrenzt ist und wenigstens ein zwischen einem solchen Gasraum und einer an diesen angrenzenden Heizeinheit gebildeter die Zuglösung führender Strömungskanal vorgesehen ist, so dass aus der Zuglösung ausgetriebenes Gasgemisch durch die Membranwand hindurch in den Gasraum gelangt und das Produkt vorzugsweise in Form von aus der beheizten Desorberstufe austretender vom Gasgemisch gereinigter Zuglösung abführbar ist. Mit Vorteil lässt sich als Zuglösung beispielsweise Natriumhydrogencarbonat einsetzen.

Dabei umfasst eine jeweilige Heizeinheit zweckmäßigerweise einen zumindest teilweise von einer fluiddichten wärmeleitenden Wand begrenzten Heizfluidraum.

Erfindungsgemäß ist das in der beheizten Desorberstufe anfallende Gasgemisch zur Erzeugung regenerierter Zuglösung einer kombinierten Absorber-/Lösungskühlerstufe zugeführt, wobei die durch diese Absorber-/Lösungskühlerstufe erhaltene regenerierte Zuglösung vorzugsweise wieder der Vorwärtsosmoseeinrichtung zugeführt ist.

Hierbei ist von Vorteil, wenn dass der kombinierten Absorber-/Lösungskühlerstufe zudem ein Teil der aus der beheizten Desorberstufe austretenden gereinigten Zuglösung oder ein Teil der aus der Vorwärtsosmoseeinrichtung austretenden verdünnten Zuglösung zugeführt ist, wobei im letzteren Fall von der aus der Vorwärtsosmoseeinrichtung austretenden verdünnten Zuglösung der beheizten Desorberstufe vorzugsweise nur eine solche Teilmenge zugeführt ist, um die sich die Masse der aufkonzentrierten Zuglösung beim Durchströmen der Vorwärtsosmoseeinrichtung vergrößert hat, während die restliche Teilmenge verdünnter Zuglösung der kombinierten Absorber-/Lösungskühlerstufe zugeführt ist.

Erfindungsgemäß umfasst die Absorber-/Lösungskühlerstufe wenigstens einen vorzugsweise mit Unterdruck beaufschlagten, Gasgemisch aus der beheizten Desorberstufe erhaltenden Gasraum sowie wenigstens einen die gereinigte oder verdünnte Zuglösung führenden Strömungskanal, wobei ein jeweiliger Gasraum zumindest teilweise durch eine dampfdurchlässige flüssigkeitsdichte Membranwand begrenzt ist und wenigstens ein zwischen einem solchen Gasraum und einer an diesen angrenzenden Kühleinheit gebildeter die Zuglösung führender Strömungskanal vorgesehen ist, so dass das Gasgemisch aus dem Gasraum durch die Membranwand hindurch in den die gereinigte oder verdünnte Zuglösung führenden Strömungskanal strömt und in der durch die Kühleinheit gekühlten gereinigten bzw. verdünnten Zuglösung aufgelöst wird.

Zur Versorgung der Absorber-/ Lösungskühlerstufe bzw. deren Kühleinheiten mit Kühlfluid ist vorteilhafterweise eine Einrichtung zum Trocknen und Kühlen von Gas, insbesondere Luft, mittels einer hygroskopischen Lösung vorgesehen.

Von Vorteil ist hierbei insbesondere, wenn die Gastrocknungs-/Kühleinrichtung eine Gaskühler-/Absorberstufe aufweist, die wenigstens einen Gasströmungskanal sowie wenigstens einen die hygroskopische Lösung führenden Strömungskanal umfasst, wobei der Innen- oder Gasraum eines jeweiligen Gasströmungskanals zumindest teilweise durch eine dampfdurchlässige flüssigkeitsdichte Membranwand begrenzt ist und wenigstens ein zwischen einem solchen Gasströmungskanal und einem an diesen angrenzenden weiteren solchen Gasströmungskanal oder einer angrenzenden Kühleinheit gebildeter, die hygroskopische Lösung führender Strömungskanal vorgesehen ist, so dass Feuchtigkeit, insbesondere Wasserdampf, aus dem Gas über die Membranwand in die hygroskopische Lösung übergeht und in dieser absorbiert wird.

Dabei umfasst die Gaskühler-/Absorberstufe vorzugsweise mehrere zueinander parallele Gasströmungskanäle sowie mehrere zueinander parallele die hygroskopische Lösung führende Strömungskanäle. Von Vorteil ist hierbei insbesondere, wenn die die hygroskopische Lösung führenden Strömungskanäle der Gaskühler-/Absorberstufe jeweils zwischen zwei aneinandergrenzenden Gasströmungskanälen gebildet sind.

Grundsätzlich sind jedoch auch solche Ausführungen denkbar, bei denen die die hygroskopische Lösung führenden Strömungskanäle der Gaskühler-/Absorberstufe jeweils zwischen einem Gasströmungskanal und einer angrenzenden Kühleinheit gebildet sind.

Der Gaskühler-/Absorberstufe kann als Gas beispielsweise Zuluft zugeführt werden. Das aus der Gaskühler-/Absorberstufe austretende getrocknete Gas, z.B. Luft, kann der kombinierten Absorber-/ Lösungskühlerstufe insbesondere über einen zwischengeschalteten Kühler zugeführt werden. Der bzw. die Gasräume der Absorber-/Lösungskühlerstufe sind zur Unterstützung des Transports des von der beheizten Absorberstufe kommenden Gasgemisches bevorzugt mit Unterdruck beaufschlagt. Die Gasräume der Absorber-/ Lösungskühlerstufe sind zweckmäßigerweise an ein Vakuumsystem mit Kondensator angeschlossen.

Der betreffende Anteil an in der beheizten Absorberstufe anfallender aufkonzentrierter Zuglösung kann der Absorber-/Lösungskühlerstufe über einen im Fall einer Meerwasserentsalzung beispielsweise mit Meerwasser gekühlten Kühler zugeführt werden.

Die aus der Gaskühler-/Absorberstufe austretende hygroskopische Lösung ist vorteilhafterweise einer Regenerationsstufe zugeführt, in der sie regeneriert wird, wobei vorzugsweise die regenerierte hygroskopische Lösung insbesondere über einen Kühler wieder der Gaskühler-/ Absorberstufe zugeführt ist.

Hierbei ist insbesondere von Vorteil, wenn die Regenerationsstufe wenigstens einen insbesondere von Umgebungsluft durchströmten Gasströmungskanal sowie wenigstens einen die hygroskopische Lösung führenden Strömungskanal umfasst, wobei der Innen- oder Gasraum eines jeweiligen Gasströmungskanals zumindest teilweise durch eine dampfdurchlässige flüssigkeitsdichte Membranwand begrenzt ist und wenigstens ein zwischen einem solchen Gasströmungskanal und einem an diesen angrenzenden weiteren solchen Gasströmungskanal gebildeter, die hygroskopische Lösung führender Strömungskanal vorgesehen ist, so dass Feuchtigkeit, insbesondere Wasserdampf, aus der hygroskopischen Lösung über die Membranwand in das in dem Gasströmungskanals geführte Gas, insbesondere Umgebungsluft, übergeht und die hygroskopische Lösung aufkonzentriert wird.

Bevorzugt umfasst die Regenerationsstufe mehrere zueinander parallele Gasströmungskanäle sowie mehrere zueinander parallele die hygroskopische Lösung führende Strömungskanäle, wobei vorzugsweise die die hygroskopische Lösung führenden Strömungskanäle der Regenerationsstufe jeweils zwischen zwei aneinandergrenzenden Gasströmungskanälen gebildet sind.

Das der Regenerationsstufe zugeführte Gas, z.B. Umgebungsluft, kann zuvor über einen Gaserhitzer, ggf. Lufterhitzer, erhitzt werden. Das aus der Regenerationsstufe austretende Gas kann beispielsweise als Abluft abgeführt werden.

Gemäß einer anderen vorteilhaften praktischen Ausführungsform des erfindungsgemäßen Systems kann die zur Regeneration der hygroskopischen Lösung vorgesehene Regenerationsstufe auch eine von der aus der Gaskühler-/Absorberstufe austretenden hygroskopischen Lösung durchströmte Heizstufe aufweisen, die wenigstens eine Heizeinheit und wenigstens eine Verdampfereinheit umfasst, wobei eine jeweilige Heizeinheit einen zumindest teilweise von einer fluiddichten wärmeleitenden Wand begrenzten Heizfluidraum und eine jeweilige Verdampfereinheit einen zumindest teilweise durch eine dampfdurchlässige flüssigkeitsdichte Membranwand begrenzten Dampfraum umfasst, und in der Heizstufe wenigstens ein zwischen einer Heizeinheit und einer an diese angrenzenden Verdampfereinheit gebildeter, die hygroskopische Lösung führender Strömungskanal vorgesehen ist, so dass die hygroskopische Lösung über die fluiddichte wärmeleitende Wand beheizt wird und der aus der hygroskopischen Lösung entstehende Dampf durch die Membranwand hindurch in den Dampfraum gelangt.

Von Vorteil ist insbesondere auch, wenn die Regenerationsstufe wenigstens eine von der aus der Heizstufe austretenden hygroskopischen Lösung durchströmte, mit in der Heizstufe anfallendem Dampf versorgte Kondensations-/Verdampfungsstufe aufweist, die wenigstens eine Kondensationseinheit und wenigstens eine Verdampfereinheit umfasst, wobei eine jeweilige Kondensationseinheit einen zumindest teilweise von einer Kondensationswand begrenzten ersten Dampfraum und eine jeweilige Verdampfereinheit einen zumindest teilweise durch eine dampfdurchlässige flüssigkeitsdichte Membranwand begrenzten zweiten Dampfraum umfasst, und in einer jeweiligen Kondensations-/Verdampfungsstufe wenigstens ein zwischen einer solchen Kondensationseinheit und einer solchen an diese angrenzenden Verdampfereinheit gebildeter, die hygroskopische Lösung führender Strömungskanal vorgesehen ist, so dass die hygroskopische Lösung über die Kondensationswand erhitzt wird und der aus der hygroskopischen Lösung entstehende Dampf durch die Membranwand hindurch in den zweiten Dampfraum gelangt, wobei vorzugsweise die aus der letzten Kondensations-/Verdampfungsstufe austretende hygroskopische Lösung (70) wieder der Gaskühler-/Absorberstufe zugeführt ist.

Bevorzugt umfasst die Regenerationsstufe auch eine Kondensationsstufe mit wenigstens einer Kühleinheit und wenigstens einer Kondensationseinheit, wobei eine jeweilige Kühleinheit einen vorzugsweise zumindest teilweise von einer fluiddichten wärmeleitenden Wand begrenzten Kühlfluidraum und eine jeweilige Kondensationseinheit einen zumindest teilweise von einer Kondensationswand begrenzten Dampfraum umfasst und in der Kondensationsstufe wenigstens eine Kühleinheit zumindest einer Kondensationseinheit benachbart ist, so dass die Kondensationswand der jeweiligen Kondensationseinheit über die Kühleinheit gekühlt wird, und wobei der Kondensationsstufe vorzugsweise in einer vorangehenden Kondensations-/Verdampfungsstufe entstehender Dampf zugeführt ist.

Umfasst die der Regeneration der hygroskopischen Lösung dienende Regenrationsstufe wie zuvor erwähnt eine Heizstufe, wenigstens eine Kondensations-/Verdampfungsstufe und eine Kondensationsstufe, so befindet sich diese Regenerationsstufe bevorzugt wieder im Unterdruck, das Kühlfluid und das Heizfluid vorzugsweise bei Umgebungsdruck und die hygroskopische Lösung vorzugsweise im Unterdruck. In der bzw. den Kondensations-/Verdampfungsstufen und der Heizstufe kann sich die hygroskopische Lösung über alle Stufen insbesondere auf der zum Absolutdruck im Dampfraum einer jeweiligen angrenzende Verdampfereinheit korrespondierenden Siedetemperatur befinden, wie dies in der WO 2007/054311 beschrieben ist, die, wie zuvor bereits erwähnt, in den Offenbarungsgehalt der vorliegenden Anmeldung mit einbezogen wird.

Die Heizstufe kann insbesondere wieder solar beheizt sein. Die Kondensationsstufe kann mit Kühlwasser oder auch einen anderen Kühlfluid gekühlt sein. Das in einer jeweiligen Kondensationseinheit anfallende Destillat kann abgeführt werden. Die Gasräume der Absorber-/Lösungskühlerstufe und die wenigstens eine Kondensationseinheit der der Regeneration der hygroskopischen Flüssigkeit dienendem Regenerationsstufe können beispielsweise über eine Unterdruckleitung wieder an ein Vakuumsystem mit Kondensator angeschlossen sein.

Gemäß einer bevorzugten praktischen Ausführungsform des erfindungsgemäßen Systems ist dieses als modulares Strömungssystem mit einer Vielzahl von Rahmenelementen ausgeführt. Dabei können die verschiedenen Funktionseinheiten wie insbesondere ein jeweiliger die aufzuarbeitende Lösung führender Strömungskanal, eine jeweilige Heizeinheit, eine jeweilige Verdampfereinheit, eine jeweilige Kondensationseinheit, eine jeweilige Kühleinheit, ein jeweiliger Gasraum und/oder ein jeweiliger Gaskanal jeweils in Form eines solchen Rahmenelements vorgesehen sein.

Die Rahmenelemente sind vorzugsweise mit Stegstrukturen versehen, über die sie insbesondere zur Bildung der Vorwärtsosmoseeinrichtung, einer jeweiligen Heizstufe, einer jeweiligen Kondensations-/Verdampfungsstufe, einer jeweiligen Kondensationsstufe, der beheizten Desorberstufe, der kombinierten Absorber-/Lösungskühlerstufe, der Gaskühler-/Absorberstufe und/oder der zur Regeneration der hygroskopischen Lösung vorgesehenen Regenerationsstufe miteinander verbindbar sind.

Die Rahmenelemente können jeweils einen von einem äußeren Rahmen umschlossenen Innenbereich umfassen, der vorzugsweise mit einem insbesondere gitterartigen Abstandshalter versehen ist, auf dessen beiden Seiten zur Bildung eines jeweiligen Innenraums, eines jeweiligen Heizfluidraums, eines jeweiligen Dampfraums, eines jeweiligen Kühlfluidraums, eines jeweiligen Gasraums oder eines jeweiligen Innen- oder Gasraums insbesondere jeweils eine entsprechende Funktionsfläche, vorzugsweise in Form einer Folie oder Membran, aufgebracht ist.

Bei den Stegstrukturen, über die die einzelnen Rahmenelemente und ggf. endseitige Plattenelemente miteinander verbunden werden können, kann es sich beispielsweise um Schweißstegstrukturen oder Klebestrukturen handeln, über die die Elemente miteinander verschweißt bzw. verklebt werden. Im Fall von Schweißstegstrukturen kann zur Verbindung der Rahmenelemente beispielswiese ein Reibschweißverfahren, Laserschweißverfahren und/oder Heizelementschweißverfahren angewandt werden.

Mit den erfindungsgemäßen Rahmenelementen kann das erfindungsgemäße System auf besonders einfache Weise aufgebaut und in der gewünschten Weise variiert werden. Die Rahmenelemente bzw. die über diese erhaltenden Einheiten bzw. Stufen zeichnen sich durch eine relativ einfache Form aus und bieten unterschiedliche Möglichkeiten der Lösungs-, Gas- bzw. Luft-, Kühlfluid- und Heizfluidführung usw. Je nach Funktion sind unter anderem Rahmenelemente denkbar, die auf beiden Seiten jeweils mit einer Membran, auf beiden Seiten jeweils mit einer Folie oder auf einer Seite mit einer Membran und auf der anderen Seite mit einer Folie versehen sind.

Die Erfindung wird im folgenden anhand von Ausführungsbeispielen unter Bezugnahme auf die Zeichnung näher erläutert; in dieser zeigen:
- Figur 1: eine schematische Darstellung eines Systems zur Separation eines in einer aufzuarbeitenden Lösung wie z.B. Meerwasser als Lösemittel, z.B. Wasser, enthaltendem Produkts, nicht in Übereinstimmung mit der Erfindung
- Figur 2: eine schematische Darstellung einer beispielhaften Ausführungsform eines Systems zur Separation eines in einer aufzuarbeitenden Lösung wie z.B. Meerwasser als Lösungsmittel, z.B. Wasser, enthaltenen Produkts mit einer beheizten Desorberstufe, einer kombinierten Absorber-/Lösungskühlerstufe und einer Gastrocknungs/Kühleinrichtung mit einer von einer hygroskopischen Lösung durchströmten Gaskühler-Absorberstufe und einer der Regeneration der hygroskopischen Lösung dienenden Regenerationsstufe,
- Figur 3: eine mit der Ausführungsform gemäß Figur 2 vergleichbare beispielhafte Ausführungsform des Systems bei der in der beheizten Desorberstufe jedoch nur der Produktstrom vom Gasgemisch befreit wird,
- Figur 4: eine mit der Ausführungsform gemäß Figur 2 vergleichbare beispielhafte Ausführungsform des Systems mit einer alternativen der Regeneration der hygroskopischen Lösung dienenden Regenerationsstufe,
- Figur 5: eine schematische Darstellung einer beispielhaften Ausführungform einer Vorwärtsosmoseeinrichtung in Form eines Gleichgegenstromaustauschers mit z.B. zwei hintereinander geschalteten Vorwärtsosmoseeinheiten,
- Figur 6: eine schematische Darstellung einer beispielhaften Ausführungsform einer Vorwärtsosmoseeinrichtung in Form eines Gegenstromaustauschers mit z.B. zwei hintereinander geschalteten Vorwärtsosmoseeinheiten,
- Figur 7: eine schematische Darstellung einer beispielhaften Ausführungsform eines Rahmenelements und
- Figur 8: eine schematische auseinandergezogene Darstellung einer beispielhaften Realisierung der in Form eines Gegenstromaustrauschers vorgesehenen Vorwärtsosmoseeinrichtung gemäß Figur 6 z.B. unter Verwendung von Rahmenelementen der in Figur 7 dargestellten Art und z.B. von endseitigen Plattenelementen.

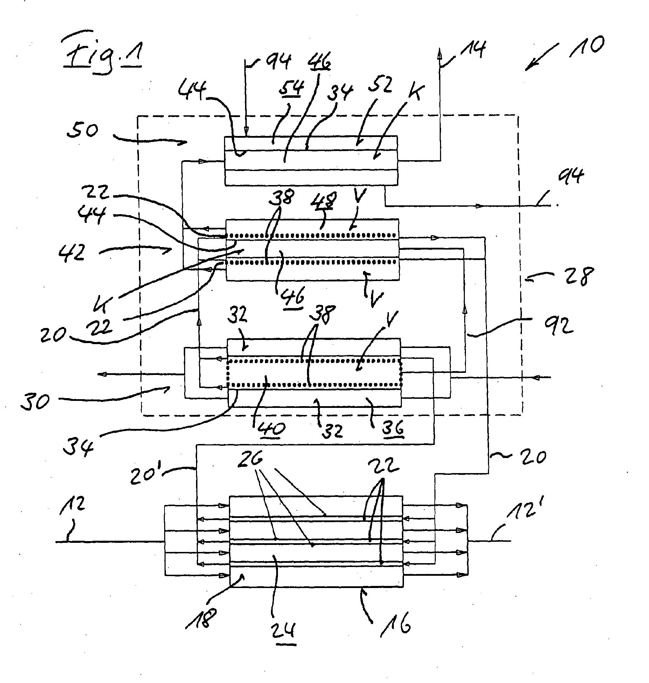

Figur 1 zeigt in schematischer Darstellung ein nicht erfindungsgemäßes System 10 zur Separation eines in einer aufzuarbeitenden Lösung 12 als Lösungsmittel enthaltenen Produkts 14. Dabei kann es sich bei der aufzuarbeitenden Lösung 12 beispielsweise um Meerwasser und bei dem Produkt 14 beispielsweise um Wasser handeln.

Das System 10 umfasst wenigstens eine von der aufzuarbeitenden Lösung 12 und einer Zuglösung 20 durchströmte Vorwärtsosmoseeinrichtung 16 sowie eine dieser nachgeschaltete Einrichtung 28 zur Gewinnung des Produkts 14 aus von der Vorwärtsosmoseeinrichtung 16 austretender verdünnter Zuglösung 20'.

Die Vorwärtsosmoseeinrichtung 16 umfasst wenigstens einen die aufzuarbeitende Lösung 12 führenden Strömungskanal 18 und wenigstens einen die Zuglösung 20 führenden Strömungskanal 22.

Dabei ist der Innenraum 24 eines jeweiligen die aufzuarbeitende Lösung 12 führenden Strömungskanals 18 zumindest teilweise durch eine für das Lösungsmittel der aufzuarbeitenden Lösung 12, nicht jedoch den darin aufgelösten Stoff, z.B. Meersalz, durchlässige semipermeable Membranwand 26 begrenzt. Zudem ist wenigstens ein die Zuglösung 20 führender Strömungskanal 22 auf einander gegenüberliegenden Seiten durch Membranwände 26 begrenzt, die zwei benachbarten die aufzuarbeitende Lösung 12 führenden Strömungskanälen 18 zugeordnet sind, so dass Lösungsmittel aus der aufzuarbeitenden Lösung 12 durch die Membranwände 26 hindurch in die angrenzenden die Zuglösung 20 führenden Strömungskanäle 22 gelangt. Die aus der Vorwärtsosmoseeinrichtung 16 austretende aufkonzentrierte aufzuarbeitende Lösung 12', z.B. aufkonzentriertes Meerwasser, kann abgeführt werden.

Die Zuglösung 20 kann die Vorwärtsosmoseeinrichtung 16 im Gegenstrom oder auch im Gleichstrom zur aufzuarbeitenden Lösung 12 durchströmen.

Wie anhand der Figur1 zu erkennen ist, kann die Vorwärtsosmoseeinrichtung 16 mehrere zueinander parallele die aufzuarbeitende Lösung führende Strömungskanäle 18 sowie mehrere zueinander parallele die Zuglösung 20 führende Strömungskanäle 22 umfassen.

Dabei können die die Zuglösung 20 führenden Strömungskanäle 22 jeweils auf einander gegenüberliegenden Seiten durch Membranwände 26 begrenzt sein, die zwei benachbarten die aufzuarbeitende Lösung 12 führenden Strömungskanälen 18 zugeordnet sind.

Wie ebenfalls wieder anhand der Figur 1 zu erkennen ist, kann die Produktgewinnungseinrichtung 28 eine von der aus der Vorwärtsosmoseeinrichtung 16 austretenden verdünnten Zuglösung 20' durchströmte Heizstufe 30 aufweisen. Eine solche Heizstufe 30 umfasst eine Heizeinheit 32 und wenigstens eine Verdampfereinheit V. Dabei umfasst eine jeweilige Heizeinheit 32 eine zumindest teilweise von einer fluiddichten wärmeleitenden Wand 34 begrenzten Heizfluidraum 36 und eine jeweilige Verdampfereinheit V einen zumindest teilweise durch eine dampfdurchlässige flüssigkeitsdichte Membranwand 38 begrenzten Dampfraum 40. In der Heizstufe 30 ist wenigstens ein zwischen einer Heizeinheit 32 und einer an diese angrenzenden Verdampfereinheit V gebildeter, die Zuglösung 20 führender Strömungskanal 22 vorgesehen, so dass die Zuglösung 20 über die fluiddichte wärmeleitende Wand 34 beheizt wird und der aus der Zuglösung 20 entstehende Dampf durch die Membranwand 38 hindurch in den Dampfraum 40 gelangt.

Die Produktgewinnungseinrichtung 28 kann zudem wenigstens eine von der aus der Heizstufe 30 austretenden Zuglösung 20 durchströmte, mit in der Heizstufe 30 anfallendem Dampf 92 versorgte Kondensations-/Verdampfungsstufe 42 aufweisen. Eine solche Kondensations-/Verdampfungsstufe 42 umfasst wenigstens eine Kondensationseinheit K und wenigstens eine Verdampfereinheit V. Eine jeweilige Kondensationseinheit K umfasst einen zumindest teilweise von einer Kondensationswand 44 begrenzten ersten Dampfraum 46, während eine jeweilige Verdampfereinheit V einen zumindest teilweise durch eine dampfdurchlässige flüssigkeitsdichte Membranwand 38 begrenzten zweiten Dampfraum 48 umfasst.

Dabei ist in einer jeweiligen Kondensations-/Verdampfungsstufe 42 wenigstens ein zwischen einer solchen Kondensationseinheit K und einer solchen an diese angrenzenden Verdampfereinheit V gebildeter, die Zuglösung 20 führender Strömungskanal 22 vorgesehen, so dass die Zuglösung 20 über die Kondensationswand 44 erhitzt wird und der aus der Zuglösung 20 entstehende Dampf durch die Membranwand 38 hindurch in den zweiten Dampfraum 48 gelangt. Die aus der letzten Kondensations-/Verdampfungsstufe 42 austretende Zuglösung 20 kann wieder der Vorwärtsosmoseeinrichtung 16 zugeführt sein.

Wie ebenfalls aus der Figur 1 ersichtlich, kann die Produktgewinnungseinrichtung 28 zudem eine Kondensationsstufe 50 mit wenigstens einer Kühleinheit 52 und wenigstens einer Kondensationseinheit K umfassen. Eine jeweilige Kühleinheit 52 umfasst einen vorzugsweise zumindest teilweise von einer fluiddichten wärmeleitenden Wand 34 begrenzten Kühlfluidraum 54, während eine jeweilige Kondensationseinheit K einen zumindest teilweise von einer Kondensationswand 44 begrenzten Dampfraum 46 umfasst.

In der Kondensationsstufe 50 ist wenigstens eine Kühleinheit 52 zumindest einer Kondensationseinheit K benachbart, so dass die Kondensationswand 44 der jeweiligen Kondensationseinheit K über die Kühleinheit 52 gekühlt wird.

Der Kondensationsstufe 50 kann in einer vorangehenden Kondensations-/Verdampfungsstufe 42 entstehender Dampf zugeführt sein. Das Produkt 14 wird dann insbesondere in Form des in der Kondensationsstufe 50 anfallenden Destillats aus der Kondensationsstufe 50 abgeführt.

Die die Heizstufe 30, die wenigstens eine Kondensations-/Verdampfungsstufe 42 und vorzugsweise auch die Kondensationsstufe 50 umfassende, durch gestrichelte Linie markierte Produktgewinnungseinrichtung 28 befindet sich bevorzugt im Unterdruck, das Kühlfluid und das Heizfluid vorzugsweise bei Umgebungsdruck und die Zuglösung 20 vorzugsweise im Unterdruck. In der bzw. den Kondensations-/ Verdampfungsstufen 42 und der Heizstufe 50 kann sich die Zuglösung 20 über alle Stufen insbesondere auf der zum Absolutdruck im Dampfraum einer jeweiligen angrenzenden Verdampfereinheit korrespondierenden Siedetemperatur befinden, wie dies in der WO 2007/054311 beschrieben ist.

Eine jeweilige Heizeinheit 32 kann von einem beispielsweise solar beheizten Heizfluid durchströmt sein.

Die Kondensationsstufe 50 kann durch ein Kühlfluid 94, beispielsweise Kühlwasser, gekühlt sein.

Es kann also beispielsweise eine Vorwärtsosmoseeinrichtung mit einer z.B. eine Heizstufe, wenigstens eine Kondensations-/Verdampfungsstufe und einer Kondensationsstufe umfassenden Produktgewinnungseinrichtung kombiniert werden. Die Vorwärtsosmoseeinrichtung kann aus Rahmenelementen und ggf. endseitigen Plattenelementen aufgebaut sein, die mit für die Vorwärtsosmose geeigneten Membranen versehen sind. Beim Aufbau der Rahmen- oder Plattenstapel bilden sich Kanäle für die aufzuarbeitende Lösung und die Zuglösung. Die aufzuarbeitende Lösung und die Zuglösung können im Gegenstrom oder auch im Gleichstrom strömen.

Die Vorwärtsosmoseeinrichtung kann in die aufzuarbeitende Lösung, z.B. Meerwasser, getaucht sein, oder sie kann extern von der aufzuarbeitenden Lösung durchströmt werden. Ist die Vorwärtsosmoseeinrichtung in die aufzuarbeitende Lösung getaucht, ist zweckmäßigerweise dafür zu sorgen, dass sie zur Vermeidung einer Konzentrationspolarisation an den Membranen entlangströmt.

Die um das Produkt, hier beispielsweise Wasser, verdünnte Zuglösung kann einer eine Heizstufe, wenigstens eine Kondensations-/Verdampfungsstufe und eine Kondensationsstufe umfassenden Aufkonzentrationseinrichtung zugeführt werden.

Der zuvor beschriebene Aufkonzentrationsprozess kann insbesondere bei der Entsalzung von Meerwasser auch durch andere Prozesse wie insbesondere eine Umkehrosmose, einen MSF-Prozess, einen MED-Prozess oder einen MFC-Prozess ersetzt werden.

Neben Salzlösungen können auch Lösungen mit organischen Verbindungen wie z.B. Zucker eingesetzt werden. Sind diese organischen Verbindungen langkettig und besitzen sie keinen Dampfdruck, dann ist es wünschenswert, dass sie so groß sind, dass das Produkt, bei einer Meerwasserentsalzung beispielsweise Wasser, über eine Mikro- oder Ultrafiltrationsmembran abgetrennt werden kann. In diesem Fall ist das Wasser das Permeat. Die Einheit zur Gewinnung des Produkts und zur Aufkonzentration der Zuglösung kann insbesondere aus mit Stegstrukturen versehenen Rahmenelementen aufgebaut werden.

Als Zuglösungen Lösungen eingesetzt werden, die sich über den Dampfdruck sowohl trennen als auch regenerieren lassen, wobei z.B. in Wasser aufgelöstes Ammoniumhydrogencarbonat genannt sei. Ammoniumhydrogencarbonat lässt sich in Wasser lösen, womit man eine entsprechend Zuglösung erhält. Erwärmt man diese Lösung, so wird gasförmig NH₃ und CO₂ frei. Zurück bleibt reines Wasser.

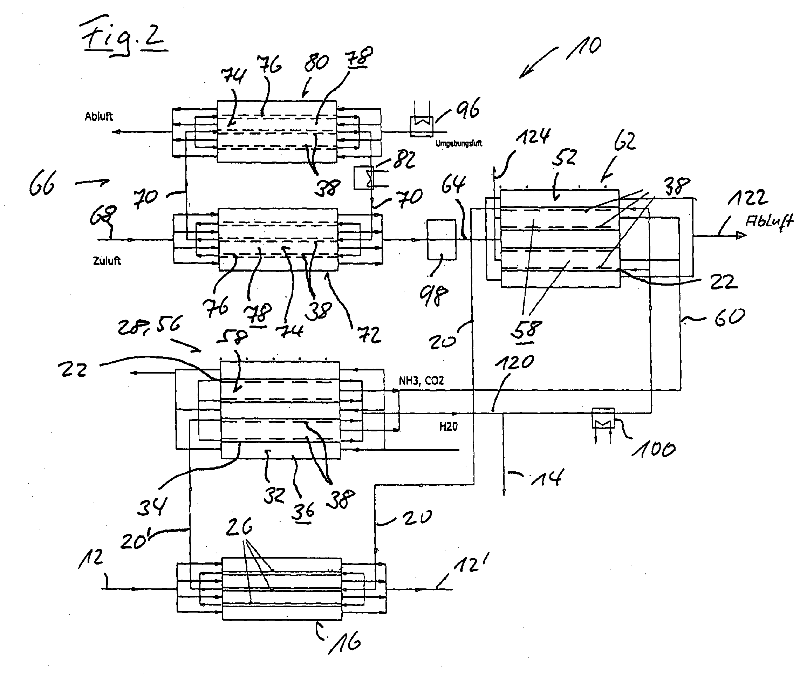

Figur 2 zeigt in beispielhafter Ausführungform ein System 10 zur Separation eines in einer aufzuarbeitenden Lösung 12 wie z.B. Meerwasser als Lösungsmittel, z.B. Wasser, enthaltenen Produkts 14 mit einer beheizten Desorberstufe 56, einer kombinierten Absorber-/Lösungskühlerstufe 62 und einer Gastrocknungs-/Kühleinrichtung 66 mit einer von einer hygroskopischen Lösung 70 durchströmten Gaskühler-/Absorberstufe 72 und einer der Regeneration der hygroskopischen Lösung 70 dienenden Regenerationsstufe 80.

Wie der Figur 2 entnommen werden kann, kann die Produktgewinnungseinrichtung 28 z.B. eine von der aus der Vorwärtsosmoseeinrichtung 16 austretenden verdünnten Zuglösung 20' durchströmte beheizte Desorberstufe 56 aufweisen, die wenigstens einen Gasraum 58 sowie wenigstens einen die verdünnte Zuglösung 20' führenden Strömungskanal 22 umfasst.

Dabei ist ein jeweiliger Gasraum 58 zumindest teilweise durch eine dampfdurchlässige flüssigkeitsdichte Membranwand 38 begrenzt. Es ist wenigstens ein zwischen einem solchen Gasraum 58 und einer an diesen angrenzenden Heizeinheit 32 gebildeter die verdünnte Zuglösung 20' führender Strömungskanal 22 vorgesehen, so dass aus der verdünnten Zuglösung 20' ausgetriebenes Gasgemisch 60 durch die Membranwand 38 hindurch in den Gasraum 58 gelangt und das Produkt 14 vorzugsweise in Form von aus der beheizten Desoberstufe 56 austretender vom Gasgemisch 60 gereinigter Zuglösung 120 abführbar ist, bei der es sich beispielsweise im Fall der Meerwasserentsalzung um reines Wasser handelt.

Dabei kann eine jeweilige Heizeinheit 32 einen zumindest teilweise von einer fluiddichten wärmeleitenden Wand 34 begrenzten Heizfluidraum 36 umfassen.

Ein Teil der aus der beheizten Desorberstufe 56 austretenden vom Gasgemisch 60 gereinigten, insbesondere in Form reinen Wassers vorliegenden Zuglösung 120 und das in der beheizten Desorberstufe 56 abgetrennte Gasgemisch 60 können zur Erzeugung regenerierter Zuglösung 20 einer kombinierten Absorber-/Lösungskühlerstufe 62 zugeführt werden. Die durch diese Absorber-/Lösungskühlerstufe 62 erhaltene regenerierte Zuglösung 20 kann wieder der Vorwärtsosmoseeinrichtung 16 zugeführt werden.

Die Absorber-/Lösungskühlerstufe 62 kann wenigstens einen vorzugsweise mit Unterdruck beaufschlagten, Gasgemisch 60 aus der beheizten Desorberstufe 56 erhaltenden Gasraum 58 sowie wenigstens einen die vom Gasgemisch 60 gereinigte Zuglösung 120 führenden Strömungskanal 22 umfassen. Dabei ist ein jeweiliger Gasraum 58 zumindest teilweise durch eine dampfdurchlässige flüssigkeitsdichte Membranwand 38 begrenzt.

Zudem ist wenigstens ein zwischen einem solchen Gasraum 58 und einer an diesen angrenzenden Kühleinheit 52 gebildeter die gereinigte Zuglösung 120 führender Strömungskanal 22 vorgesehen, so dass das Gasgemisch aus dem Gasraum 58 durch die Membranwand 38 hindurch in den die gereinigte Zuglösung 120 führenden Strömungskanal 22 strömt und in der durch die Kühleinheit 52 gekühlten gereinigten Zuglösung 120 aufgelöst wird.

Wie der Figur 2 zudem entnommen werden kann, kann zur Versorgung der Absorber-/Lösungskühlerstufe 62 bzw. deren Kühleinheiten 52 mit Kühlfluid 64, z.B. kalte Luft, eine Einrichtung 66 zum Trocknen und Kühlen von Gas 68, beispielweise Luft, insbesondere Zuluft, mittels einer hygroskopischen Lösung 70 vorgesehen sein.

Die Gastrocknungs-/Kühleinrichtung 66 kann insbesondere eine Gaskühler-/Absorberstufe 72 mit wenigstens einem Gasströmungskanal 74 sowie wenigstens einem die hygroskopische Lösung 70 führenden Strömungskanal 76 aufweisen. Dabei ist der Innen- oder Gasraum 78 eines jeweiligen Gasströmungskanals 74 zumindest teilweise durch eine dampfdurchlässige flüssigkeitsdichte Membranwand 38 begrenzt.

Es ist wenigstens ein zwischen einem solchen Gasströmungskanal 74 und einem an diesen angrenzenden weiteren solchen Gasströmungskanal 74 gebildeter, die hygroskopische Lösung 70 führender Strömungskanal 76 vorgesehen, so dass Feuchtigkeit, insbesondere Wasserdampf, aus dem Gas 68 über die Membranwand 38 in die hygroskopische Lösung 70 übergeht und in dieser absorbiert wird.

Die Gaskühler-/Absorberstufe 72 kann insbesondere mehrere zueinander parallele Gasströmungskanäle 74 sowie mehrere zueinander parallele die hygroskopische Lösung 70 führende Strömungskanäle 76 umfassen.

Dabei können die die hygroskopische Lösung 70 führenden Strömungskanäle 76 der Gaskühler-/Absorberstufe 72 insbesondere jeweils zwischen zwei aneinander grenzenden Gasströmungskanälen 74 gebildet sein.

Wie der Figur 2 zudem entnommen werden kann, kann die aus der Gaskühler-/Absorberstufe 72 austretende hygroskopische Lösung 70 einer Regenerationsstufe 80 zugeführt sein, in der sie regeneriert wird. Die regenerierte hygroskopische Lösung 70 kann insbesondere über einen Kühler 82 wieder der Gaskühler-/Absorberstufe 72 zugeführt werden.

Die Regenerationsstufe 80 kann wenigstens einen insbesondere von Umgebungsluft durchströmten Gasströmungskanal 74 sowie wenigstens einen die hygroskopische Lösung 70 führenden Strömungskanal 76 umfassen.

Dabei ist der Innen- oder Gasraum 78 eines jeweiligen Gasströmungskanals 74 zumindest teilweise durch eine dampfdurchlässige flüssigkeitsdichte Membranwand 38 begrenzt.

Es ist wenigstens ein zwischen einem solchen Gasströmungskanal 74 und einem an diesen angrenzenden weiteren solchen Gasströmungskanal 74 gebildeter, die hygroskopische Lösung 70 führender Strömungskanal 76 vorgesehen, so dass Feuchtigkeit, insbesondere Wasserdampf, aus der hygroskopischen Lösung 70 über die Membranwand 38 in das in den Gasströmungskanal 74 geführte Gas, insbesondere Umgebungsluft, übergeht und die hygroskopische Lösung 70 aufkonzentriert wird.

Die Regenerationsstufe 80 kann insbesondere mehrere zueinander parallele Gasströmungskanäle 78 sowie mehrere zueinander parallele die hygroskopische Lösung 70 führende Strömungskanäle umfassen. Dabei können die die hygroskopische Lösung 70 führende Strömungskanäle 76 der Regenerationsstufe 80 insbesondere jeweils zwischen zwei aneinander grenzenden Gasströmungskanälen 74 gebildet sein.

Die aus der Regenerationsstufe 80 austretende hygroskopische Lösung 70 kann über einen Kühler 82 zur Gaskühler-/Absorberstufe 72 zurückgeführt werden. Der Regenerationsstufe 80 kann das Gas, z.B. Umgebungsluft, über einen Gaserhitzer 96, ggf. Lufterhitzer, zugeführt werden. Das aus der Regenrationsstufe 80 austretende Gas kann also insbesondere als Abluft abgeführt werden.

Bei dem der Gaskühl-/Absorberstufe 72 zugeführten Gas 68 kann es sich beispielsweise um Zuluft handeln. Das aus der Gaskühler-/Absorberstufe 72 austretende Gas, z.B. getrocknete Luft, kann der Absorber-/Lösungskühlerstufe 62 über einen Kühler 98 zugeführt werden. Die Absorber-/Lösungskühlerstufe 62 wird also mit kühlem Gas bzw. kühler Luft versorgt. Das aus der Absorber-/Lösungskühlerstufe 62 wieder austretende Gas kann als Abgas bzw. Abluft 122 abgeführt werden.

Der betreffende Anteil der aus der beheizten Desorberstufe 56 austretenden gereinigten Zuglösung 120 bzw. reinen Wassers kann der Absorber-/Lösungs-kühlerstufe 62 über einen Kühler 100 zugeführt werden, wobei zur Kühlung ggf. Meerwasser verwendet werden kann.

Die Vorwärtsosmoseeinrichtung 16 kann insbesondere zumindest im wesentlichen wieder so ausgeführt sein, wie die anhand der Figur 1 beschriebene Vorwärtsosmoseeinrichtung 16.

Mit diesem anhand der Figur 2 beschriebenen System kann der Vorwärtsosmose-Prozess insbesondere mit Natriumhydrogencarbonat durchgeführt werden. So können in der Vorwärtsosmoseeinrichtung 16 z.B. Meerwasser und die Zuglösung beispielsweise im Gegenstrom geführt werden. Mit dem osmotischen Druck der Zuglösung strömt z.B. Wasser durch die semipermeablen Membranwände in die Zuglösung, womit diese verdünnt wird. Die verdünnte Zuglösung 20' strömt in der z.B. mit Solarenergie beheizten Desorberstufe 56. Diese enthält Kanäle für die verdünnte Zuglösung 20' und das Heizfluid sowie die ausgetriebenen Gase, hier beispielsweise NH₃ und CO₂, wobei in diesem Gasgemisch Wasserdampf entsprechend seines Dampfdrucks enthalten ist.

Das beispielsweise von den Gasen NH₃ und CO₂ gereinigte, in dem Desorber 56 gewonnene Destillat wird aus dem Kreislauf ausgeschleust.

Das Gasgemisch 60 strömt aufgrund seines Druckgradienten zu der kombinierten Absorber-/Lösungskühlerstufe 62. Diese umfasst Kanäle für beispielsweise Luft, die insbesondere durch Folien begrenzt sein könne, Kanäle für das Gasgemisch, die von einer wasserdichten, dampfdurchlässigen Membran begrenzt sein können, sowie Kanäle für die gereinigte Zuglösung 120, die auf einer Seite jeweils durch eine Membran und auf der anderen Seite jeweils durch einen Folie zum Nachbarkanal abgegrenzt sein können. Der Absorber-/Lösungskühlerstufe 62 strömen Gasgemisch 60 und vom Gasgemisch 60 gereinigte Zuglösung 120, beispielsweise reines Wasser, aus der beheizten Desorberstufe 56 beispielsweise im Gleichstrom zu.

Die gereinigte Zuglösung 120 bzw. das Wasser kann auf dem Weg zur Absorber-/Lösungskühlerstufe 62 noch über einen Kühler oder Wärmetauscher 100 vorgekühlt werden.

Insbesondere im Gegenstrom zum Gasgemisch und Wasser strömt der Absorber-/Lösungskühlerstufe Kühlfluid 64, hier beispielsweise kalte Luft zu. Bei dem in der Figur 2 dargestellten System kommt beispielsweise zuströmende Luft als getrocknete Luft von der Gaskühler-/Absorberstufe 72, die dann über einen zwischengeschalteten Kühler 98, hier beispielsweise Luftkühler, weiter gekühlt werden kann.

Aus dem Kanal für das Gasgemisch 60 strömen beispielsweise NH₃ und CO₂ durch die mikroporösen, wasserdichten Membranen der Absorber-/Lösungskühlerstufe 62 und werden im hier beispielsweise durch den Luftstrom gekühlten Wasser gelöst. Die Volumenverkleinerung des Gasgemisches durch Absorption von NH₃ und CO₂ sorgt dafür, dass stets Gasgemisch aus der beheizten Desorberstufe 56 nachströmt. Der im Kanal verbleibende Wasserdampf kann über ein Vakuumsystem 124 einem Kondensator zugeführt und dort kondensiert werden. Auch dieses Vakuumsystem führt zum Strömen des Gasgemischs von der beheizten Desorberstufe 56 zur kombinierten Absorber-/Lösungskühlerstufe 62. Aus dieser tritt eine neue Zuglösung 20 aus, die wieder der Vorwärtsosmoseeinrichtung 16 zugeführt werden kann.

Die der kombinierten Absorber-/Lösungskühlerstufe zugeführte Luft kommt aus der Gaskühler-/Absorberstufe 72, zu der die der Regeneration der hygroskopischen Lösung 70 dienende Regenerationsstufe 80 parallel geschaltet sein kann. In diesem Kreislauf kann mit der hygroskopischen Flüssigkeit 70 Gas 68, hier beispielsweise Luft, in der Gaskühler-/Absorberstufe 72 getrocknet werden. Die durch die Aufnahme des Wasserdampfs verdünnte hygroskopische Lösung 70 kann zur Aufkonzentration der insbesondere als Desorber wirkenden Regenerationsstufe 80 zugeführt werden. Nach der Desorption des zuvor aufgenommenen Wasserdampfs kann die hygroskopische Flüssigkeit 70 beispielsweise noch in dem Kühler 82 gekühlt werden, bevor sie erneut der Gaskühler-/Absorberstufe 72 zum Trocknen des Gases 68 bzw. Luft zugeführt wird.

Wie der Figur 2 entnommen werden kann, kann der beheizten Desorberstufe 56 beispielsweise die gesamte aus der Vorwärtsosmoseeinrichtung 16 austretende verdünnte Zuglösung 20' zugeführt werden. In diesem Fall kann ein Teil der aus der beheizten Desorberstufe 56 austretenden vom Gasgemisch 60 gereinigten Zuglösung 120, insbesondere reines Wasser, zur Erzeugung regenerierter Zuglösung 20 der kombinierten Absorber-/Lösungskühlerstufe 62 zugeführt werden. Die aus der Vorwärtsosmoseeinrichtung 16 austretende, der beheizten Desorberstufe 56 zugeführte verdünnte Zuglösung 20' tritt also aus der beheizten Desorberstufe 56 als vom Gasgemisch 60 gereinigte Zuglösung 120, insbesondere reines Wasser aus. Ein Teil dieser vom Gasgemisch 60 gereinigten Zuglösung 120 bzw. reinen Wassers dient als Basis für die in der Absorber-/ Lösungskühlerstufe 62 neu zu bildende Zuglösung 20.

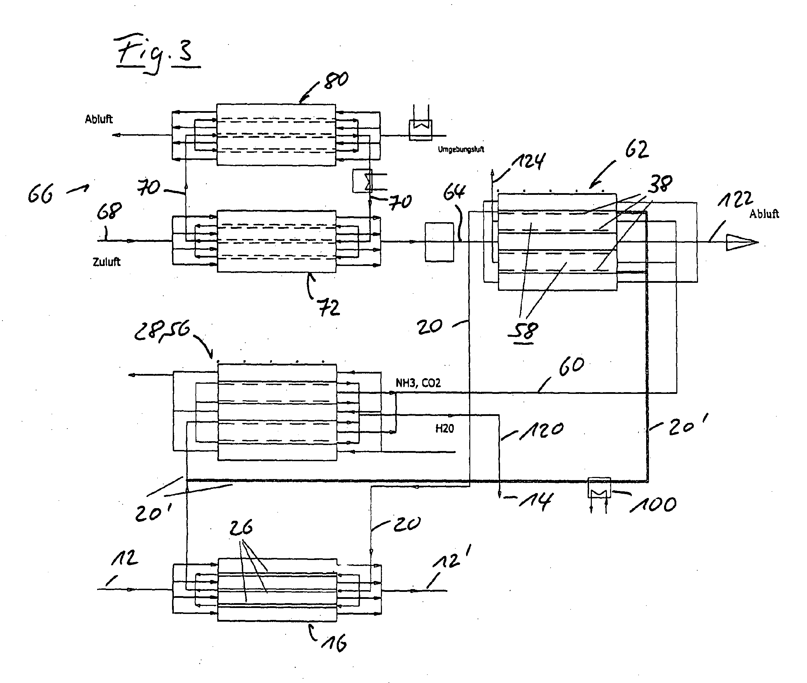

Figur 3 zeigt eine mit der Ausführungsform gemäß Figur 2 vergleichbare beispielhafte Ausführungsform des Systems 10, bei der in der beheizten Desorberstufe 56 jedoch nur der Produktstrom vom Gasgemisch 60 befreit wird. In diesem Fall wird der kombinierten Absorber-/Lösungskühlerstufe 62 zur Neubildung der Zuglösung 20 ein Teil der aus der Vorwärtsosmoseeinrichtung 16 austretenden verdünnten Zuglösung 20' zugeführt. Dabei wird von der aus der Vorwärtsosmoseeinrichtung 16 austretenden verdünnten Zuglösung 20' der beheizten Desorberstufe 56 insbesondere nur eine solche Teilmenge zugeführt, um die sich die Masse der aufkonzentrierten Zuglösung 20 beim Durchströmen der Vorwärtsosmoseeinrichtung 16 vergrößert hat. Aus diesem hinzugekommenen Volumenstrom wird nun in der beheizten Desorberstufe 56 das Gasgemisch 60, hier beispielsweise NH₃ und CO₂, abgetrennt, um das Produkt 14 zu bilden. Die restliche Teilmenge verdünnter Zuglösung 20' aus der Vorwärtsosmoseeinrichtung 16 wird der kombinierten Absorber-/Lösungskühlerstufe 62 zugeführt. In der Absorber-/Lösungskühlerstufe 62 wird dieser restlichen Teilmenge verdünnter Zuglösung 20' dann das abgetrennte Gasgemisch 60 bzw. NH₃, CO₂ zugeführt.

Im übrigen kann diese anhand der Figur 3 beschriebene Ausführungsform des Systems 10 insbesondere zumindest im wesentlichen wieder den gleichen Aufbau wie das anhand der Figur 2 beschriebene System besitzen. Einander entsprechenden Teilen sind gleiche Bezugszeichen zugeordnet.

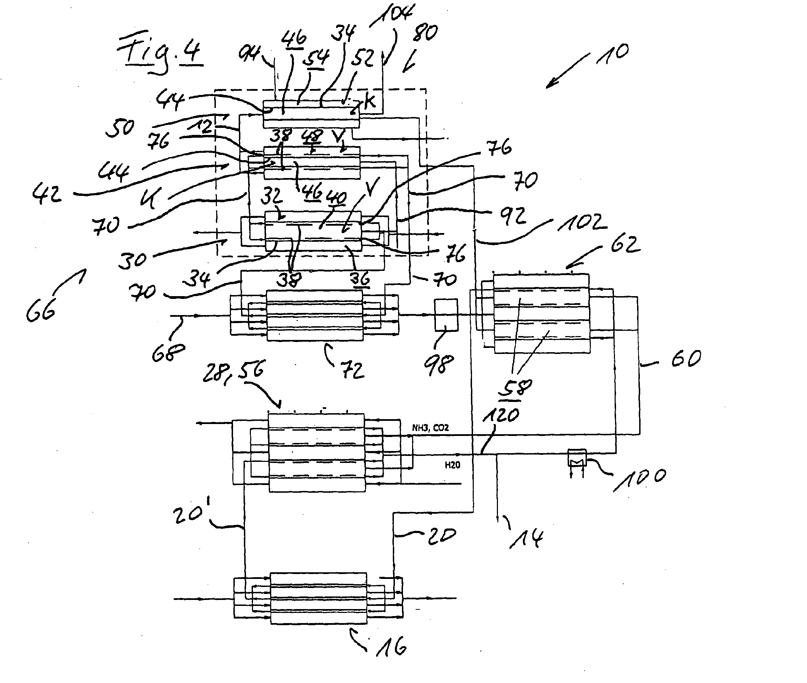

Figur 4 zeigt eine mit der Ausführungsform gemäß Figur 2 vergleichbare beispielshafte Ausführungsform des Systems 10 mit einer alternativen der Regeneration der hygroskopischen Lösung dienenden Regenrationsstufe 80.

Wie dieser Figur 4 zu entnehmen ist, kann die zur Regeneration der hygroskopischen Lösung 70 vorgesehene Regenerationsstufe 80 alternativ eine von der aus der Gaskühler-/Absorberstufe 72 austretenden hygroskopischen Lösung 70 durchströmte Heizstufe 30 aufweisen, die wenigstens eine Heizeinheit 32 und wenigstens eine Verdampfereinheit V umfasst, wobei eine jeweilige Heizeinheit 32 einen zumindest teilweise von einer fluiddichten wärmeleitenden Wand 34 begrenzten Heizfluidraum 36 und eine jeweilige Verdampfereinheit V einen zumindest teilweise durch eine dampfdurchlässige flüssigkeitsdichte Membranwand 38 begrenzten Dampfraum 40 umfasst.

In der Heizstufe 30 ist wenigstens ein zwischen einer Heizeinheit 32 und einer an diese angrenzenden Verdampfereinheit V gebildeter, die hygroskopische Lösung 70 führender Strömungskanal 76 vorgesehen, so dass die hygroskopische Lösung 70 über die fluiddichte wärmeleitende Wand 34 beheizt wird und der aus der hygroskopischen Lösung 70 entstehende Dampf durch die Membranwand 38 hindurch in den Dampfraum 40 gelangt.

Die Regenerationsstufe 80 kann auch wenigstens eine von der aus der Heizstufe 30 austretenden hygroskopischen Lösung 70 durchströmte, mit in der Heizstufe 30 anfallendem Dampf 92 versorgte Kondensations-/Verdampfungsstufe 42 aufweisen, die wenigstens eine Kondensationseinheit K und wenigstens eine Verdampfereinheit V umfasst.

Eine jeweilige Kondensationseinheit K umfasst einen zumindest teilweise von einer Kondensationswand 44 begrenzten ersten Dampfraum 46, während eine jeweilige Verdampfereinheit V einen zumindest teilweise durch eine dampfdurchlässige flüssigkeitsdichte Membranwand 38 begrenzten zweiten Dampfraum 48 umfasst.

In einer jeweiligen Kondensations-/Verdampfungsstufe 42 ist wenigstens ein zwischen einer solchen Kondensationseinheit K und einer solchen an diese angrenzenden Verdampfereinheit V gebildeter, die hygroskopische Lösung 70 führender Strömungskanal 76 vorgesehen, so dass die hygroskopische Lösung 70 über die Kondensationswand 44 erhitzt wird und der aus der hygroskopischen Lösung 70 entstehende Dampf durch die Membranwand 38 hindurch in den zweiten Dampfraum 48 gelangt.

Die aus der letzten Kondensations-/Verdampfungsstufe 42 austretende hygroskopische Lösung 70 kann insbesondere über einen Kühler wieder der Gaskühler-/Absorberstufe 72 zugeführt werden.

Wie der Figur 4 zudem entnommen werden kann, kann die Regenerationsstufe 80 zudem eine Kondensationsstufe 50 mit wenigstens einer Kühleinheit 52 und wenigstens einer Kondensationseinheit K umfassen, wobei eine jeweilige Kühleinheit 52 einen vorzugsweise zumindest teilweise von einer fluiddichten wärmeleitenden Wand begrenzten Kühlfluidraum 54 und eine jeweilige Kondensationseinheit K einen zumindest teilweise von einer Kondensationswand 44 begrenzten Dampfraum 46 umfasst.

In der Kondensationsstufe 50 ist wenigstens eine Kühleinheit 52 zumindest einer Kondensationseinheit K benachbart, so dass die Kondensationswand 44 der jeweiligen Kondensationseinheit K über die Kühleinheit 52 gekühlt wird.

Der Kondensationsstufe 50 kann in einer vorangehenden Kondensations-/Verdampfungsstufe 42 entstehender Dampf 92 zugeführt werden.

Die in der Figur 4 durch gestrichelte Linien markierte, eine Heizstufe 30, wenigstens eine Kondensations-/Verdampfungsstufe 42 und vorzugsweise eine Kondensationsstufe 50 umfassende Regenerationsstufe 80 befindet sich bevorzugt im Unterdruck, das Kühlfluid und das Heizfluid vorzugsweise bei Umgebungsdruck und die hygroskopische Lösung 70 vorzugsweise im Unterdruck. In der bzw. den Kondensations-/Verdampfungsstufen 42 und der Heizstufe 30 kann sich die hygroskopische Lösung 70 über alle Stufen insbesondere auf der zum Absolutdruck im Dampfraum einer jeweiligen angrenzenden Verdampfereinheit V korrespondierenden Siedetemperatur befinden, wie dies in der WO 2007/054311 beschrieben ist.

Die Heizstufe 30 kann von einem beispielsweise solar beheizten Heizfluid durchströmt sein.

Die Gasräume 58 der Absorber-/Lösungskühlerstufe 62 und der Dampfraum 46 der Kondensationsstufe 50 können beispielsweise über eine Unterdruckleitung 102 an ein Vakuumsystem und einen Kondensator angeschlossen sein. Die Kondensationsstufe 50 wird über ein Kühlfluid 94, hier beispielsweise Wasser, gekühlt. Im Dampfraum 46 der Kondensationsstufe 50 anfallendes Destillat kann beispielsweise über eine Leitung 104 abgeführt werden.

Im übrigen kann dieses anhand der Figur 4 beschriebene System insbesondere zumindest im wesentlichen wieder so aufgebaut sein, wie dies anhand der Figur 2 oder 3 beschrieben wurde. Einander entsprechenden Teilen sind gleiche Bezugszeichen zugeordnet.

Für dieses anhand der Figur 4 beschriebene System kann als Zuglösung insbesondere wieder eine Lösung eingesetzt werden, die sich über Dampfdruckunterschiede trennen und regenerieren lässt.

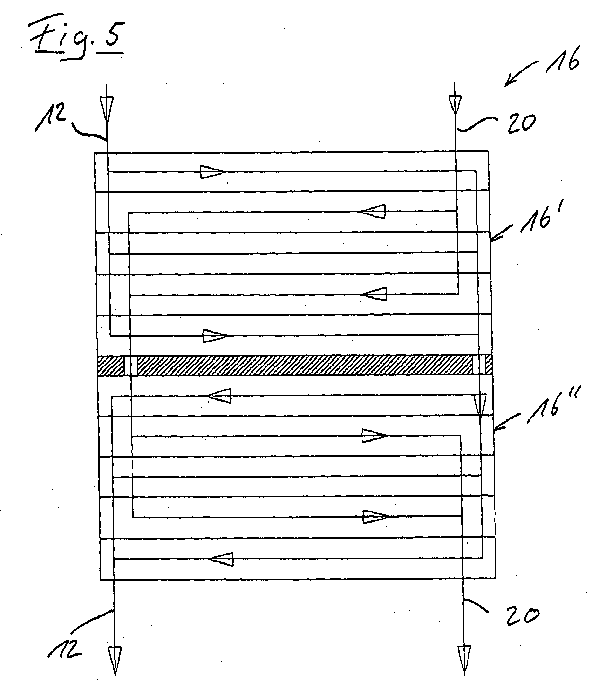

Figur 5 zeigt in schematischer Darstellung eine beispielhafte Ausführungsform einer Vorwärtsosmoseeinrichtung 16 in Form eines Gleichgegenstromaustauschers mit z.B. zwei hintereinander geschalteten Vorwärtsosmoseeinheiten 16', 16".

Wie anhand der Figur 5 zu erkennen ist, werden die aufzuarbeitende Lösung 12, z.B. Meerwasser, sowie die Zug- oder Vorwärtsosmoselösung 20 an einer Seite der zweistufigen Vorwärtsosmoseeinrichtung 16 zugeführt. In jeder Stufe oder Einheit 16', 16" strömen die Lösungen gegeneinander.

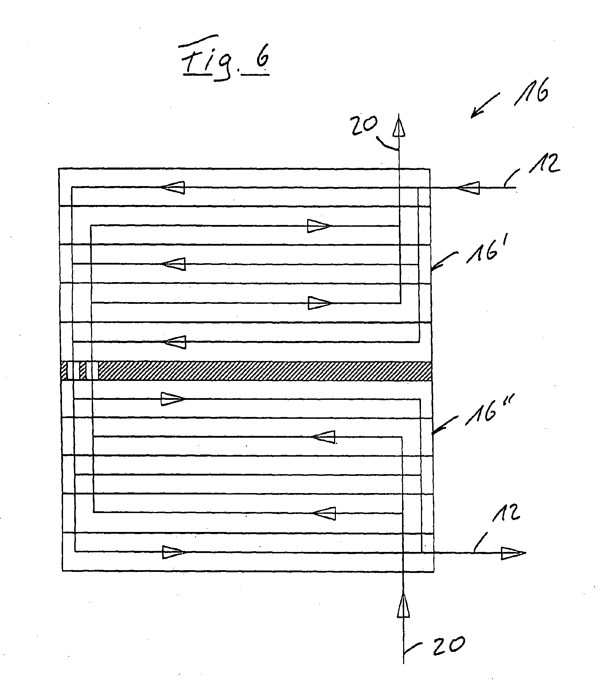

Figur 6 zeigt in schematischer Darstellung eine beispielshafte Ausführungsform einer Vorwärtsosmoseeinrichtung 16 in Form eines Gegenstromaustauschers mit z.B. zwei hintereinander geschalteten Vorwärtsosmoseeinheiten 16', 16". Die aufzuarbeitende Lösung 12, z.B. Meerwasser, und die Zug- oder Vorwärtsosmoselösung 20 werden an verschiedenen Seiten der zweistufigen Vorwärtsosmoseeinrichtung 16 zugeführt. In jeder Einheit oder Stufe 16', 16" strömen die Lösungen gegeneinander.

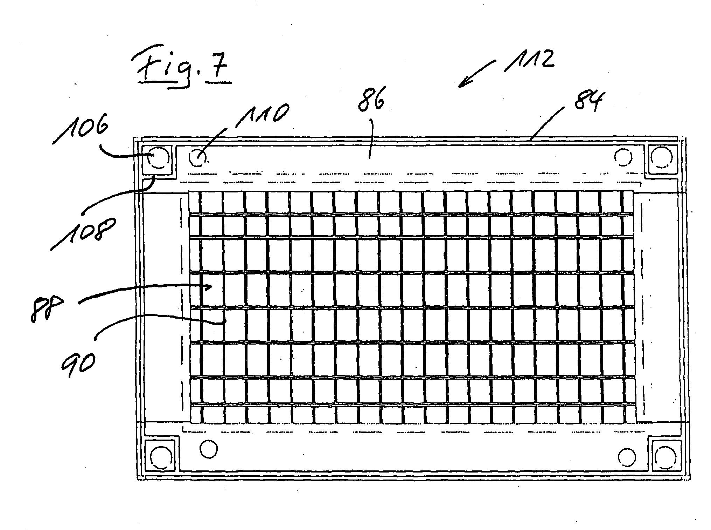

Das erfindungsgemäße System 10 zur Separation eines in einer aufzuarbeitenden Lösung 12 als Lösemittel enthaltenden Produkts 14 kann insbesondere als modulares Strömungssystem mit einer Vielzahl von Rahmenelementen 112 und ggf. insbesondere endseitigen Plattenelementen 114 (siehe auch Figuren 6 und 7) ausgeführt sein. Dabei können die verschiedenen Funktionseinheiten wie insbesondere ein jeweiliger die aufzuarbeitende Lösung 12 führender Strömungskanal 18, eine jeweilige Heizeinheit 32, eine jeweilige Verdampfereinheit V, eine jeweilige Kondensationseinheit K, eine jeweilige Kühleinheit 52, ein jeweiliger Gasraum 58 und/oder ein jeweiliger Gasströmungskanal 74 jeweils in Form eines solchen Rahmenelements vorgesehen sein.

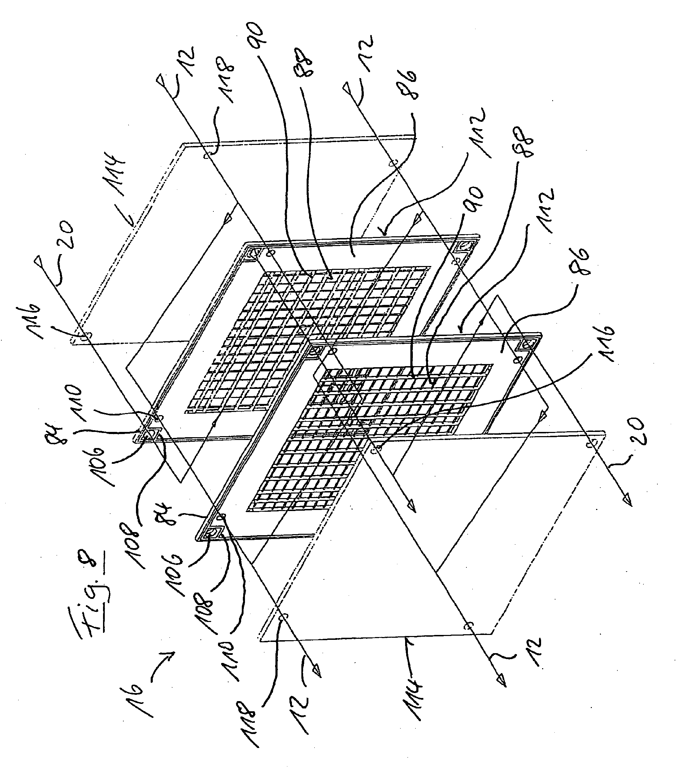

Dabei können die Rahmenelemente 112, wie insbesondere auch anhand der Figuren 7 und 8 zu erkennen ist, insbesondere mit Stegstrukturen 84 versehen sein, über die sie insbesondere zur Bildung der Vorwärtsosmoseeinrichtung 16, einer jeweiligen Heizstufe 30, einer jeweiligen Kondensations-/Verdampfungsstufe 42, einer jeweiligen Kondensationsstufe 50, der beheizten Desorberstufe 56, der kombinierten Absorber-/Lösungskühlerstufe 62, der Gaskühler-/Absorberstufe 72 und/oder der zur Regeneration der hygroskopischen Lösung 70 vorgesehenen Regenerationsstufe 80 miteinander verbindbar sind.

Die Rahmenelemente 112 können, wie ebenfalls wieder aus den Figuren 7 und 8 ersichtlich, jeweils einen von einem äußeren Rahmen 86 umschlossenen Innenbereich 88 umfassen, der mit einem insbesondere gitterartigen Abstandshalter 90 versehen sein kann, auf dessen beiden Seite zur Bildung eines jeweiligen Innenraums 24, eines jeweiligen Heizfluidraums 36, eines jeweiligen Dampfraums 40, 46, 48, eines jeweiligen Kühlfluidraums 54, eines jeweiligen Gasraums 58 oder eines jeweiligen Innen- oder Gasraums 78 insbesondere jeweils eine entsprechende Funktionsfläche, vorzugsweise in Form einer Folie oder Membran aufgebracht ist.

Dabei kann je nach der zu erfüllenden Funktion ein jeweiliges Rahmenelement auf beiden Seiten jeweils mit einer Membran, auf beiden Seiten jeweils mit einer Folie oder auf der einen Seite mit einer Membran und auf der anderen Seite mit einer Folie versehen sein.

Bei den Stegstrukturen 84, über die die einzelnen Rahmenelemente 112 miteinander verbunden werden können, kann es sich beispielsweise um Schweißstegstrukturen oder Klebestrukturen handeln, über die die Rahmenelemente miteinander verschweißt bzw. verklebt werden. Im Fall von Schweißstegstrukturen kann zur Verbindung der Rahmenelemente beispielsweise ein Reibschweißverfahren, Laserschweißverfahren und/oder Heizelementschweißverfahren angewandt werden. Mit den erfindungsgemäßen Rahmenelementen kann das erfindungsgemäße System auf besonders einfache Weise aufgebaut und in der gewünschten Weise variiert werden. Die Rahmenelemente bzw. die über diese erhaltenen Einrichtungen, Einheiten bzw. Stufen zeichnen sich durch eine relativ einfache Form aus und bieten unterschiedliche Möglichkeiten der Lösungs-, Gas- bzw. Luft-, Kühlfluid- und Heizfluidführung.

Figur 7 zeigt in schematischer Darstellung eine beispielhafte Ausführungsform eines Rahmenelements 112 mit einem von einem äußeren Rahmen 86 umschlossenen Innenbereich 88, der mit einem im vorliegenden Fall beispielsweise gitterartigen Abstandshalter 90 versehen ist. Auf den beiden Seiten eines solchen Rahmenelements 112 kann, wie bereits ausgeführt, jeweils eine entsprechende Funktionsfläche insbesondere in Form einer Folie oder Membran aufgebracht sein.

Das Rahmenelement 112 ist hier z.B. in den Eckbereichen mit Durchführungen 106 versehen, die jeweils durch einen Stegabschnitt 108 zum Innenbereich 88 hin abgegrenzt sind. Im Bereich dieser Durchführungen ist jeweils eine weitere Durchführung 110 vorgesehen. Wie anhand der Figur 6 zu erkennen ist, sind diese Durchführungen 110, anders als die Durchführungen 106, nicht durch einen zusätzlichen Stegabschnitt 108 abgegrenzt.

Figur 8 zeigt in schematischer auseinandergezogener Darstellung eine beispielhafte Realisierung der in Form eines Gegenstromaustauschers vorgesehenen Vorwärtsosmoseeinrichtung 16 gemäß Figur 6 unter Verwendung von Rahmenelementen der in der Figur 7 dargestellten Art. Dabei sind einander entsprechenden Teilen gleiche Bezugszeichen zugeordnet.

Wie anhand der Figur 8 zu erkennen ist, sind zwei solche Rahmenelemente 112 zwischen zwei endseitigen Plattenelementen 114 vorgesehen.

Im vorliegenden Fall sind die beiden Rahmenelemente 112 beispielsweise jeweils beidseitig mit Membranen (nicht dargestellt) versehen. Die Rahmenelemente 112 und vorzugsweise auch die Plattenelemente 114 werden über Stegstrukturen 84 miteinander verbunden.

Wie anhand der Figur 8 zu erkennen ist, sind auch die Plattenelemente 114 mit Durchführungen 116, 118 versehen. Dabei können die Durchführungen 116 der Plattenelemente 114 im montierten Zustand mit den Durchführungen 106 der Rahmenelemente 112 und die Durchführungen 118 der Plattenelemente 114 mit den Durchführungen 110 der Rahmenelemente 112 ausgerichtet sein. Der Verlauf der aufzuarbeitenden Lösung 12 sowie der Zuglösung 20 durch die montierte Vorwärtsosmoseeinrichtung ist schematisch durch entsprechende Linienzüge dargestellt.

### Bezugszeichenliste

- 10: System
- 12: aufzuarbeitende Lösung
- 12': aufkonzentrierte aufzuarbeitende Lösung
- 14: Produkt
- 16: Vorwärtsosmoseeinrichtung
- 16': Vorwärtsosmoseeinheit
- 16": Vorwärtsosmoseeinheit
- 18: aufzuarbeitende Lösung führender Strömungskanal
- 20: Zuglösung
- 20': verdünnte Zuglösung
- 22: Zuglösung führender Strömungskanal
- 24: Innenraum
- 26: semipermeable Vorwärtsosmose-Membranwand
- 28: Produktgewinnungseinrichtung
- 30: Heizstufe
- 32: Heizeinheit
- 34: fluiddichte wärmeleitende Wand
- 36: Heizfluidraum
- 38: dampf- oder gasdurchlässige flüssigkeitsdichte Membranwand
- 40: Dampfraum
- 42: Kondensations-/Verdampfungsstufe
- 44: Kondensationswand
- 46: erster Dampfraum
- 48: zweiter Dampfraum
- 50: Kondensationsstufe
- 52: Kühleinheit
- 54: Kühlfluidraum
- 56: beheizte Desorberstufe
- 58: Gasraum
- 60: Gasgemisch
- 62: kombinierte Absorber-/Lösungskühlerstufe
- 64: Kühlfluid
- 66: Gastrocknungs-/Kühleinrichtung
- 68: Gas
- 70: hygroskopische Lösung
- 72: Gaskühler-/Absorberstufe
- 74: Gaströmungskanal
- 76: hygroskopische Lösung führender Strömungskanal
- 78: Innen- oder Gasraum
- 80: Regenerationsstufe
- 82: Kühler
- 84: Stegstruktur
- 86: äußerer Rahmen
- 88: Innenbereich
- 90: Abstandshalter
- 92: Dampf
- 94: Kühlfluid
- 96: Gaserhitzer
- 98: Kühler
- 100: Kühler
- 102: Unterdruckleitung
- 104: Leitung
- 106: Durchführung
- 108: Stegabschnitt
- 110: Durchführung
- 112: Rahmenelement
- 114: Plattenelement
- 116: Durchführung
- 118: Durchführung
- 120: gereinigte Zuglösung
- 122: Abgas, Abluft
- 124: Vakuumsystem

- K: Kondensationseinheit
- V: Verdampfereinheit

## Patentansprüche

1. System (10) zur Separation eines in einer aufzuarbeitenden Lösung (12) als Lösungsmittel enthaltenen Produkts (14), mit wenigstens einer von der aufzuarbeitenden Lösung (12) und einer Zuglösung (20) durchströmten Vorwärtsosmoseeinrichtung (16) und einer dieser nachgeschalteten Einrichtung (28) zur Gewinnung des Produktes (14) aus von der Vorwärtsosmoseeinrichtung (16) austretender verdünnter Zuglösung (20'), wobei die Vorwärtsosmoseeinrichtung (16) wenigstens einen die aufzuarbeitende Lösung (12) führenden Strömungskanal (18) und wenigstens einen die Zuglösung (20) führenden Strömungskanal (22) umfasst, der Innenraum (24) eines jeweiligen die aufzuarbeitende Lösung (12) führenden Strömungskanals (18) zumindest teilweise durch eine für das Lösungsmittel der aufzuarbeitenden Lösung (12), nicht jedoch den darin aufgelösten Stoff durchlässige semipermeable Membranwand (26) begrenzt ist und wenigstens ein die Zuglösung (20) führender Strömungskanal (22) auf einander gegenüberliegenden Seiten durch Membranwände (26) begrenzt ist, die zwei benachbarten die aufzuarbeitende Lösung (12) führenden Strömungskanälen (18) zugeordnet sind, so dass Lösungsmittel aus der aufzuarbeitenden Lösung (12) durch die Membranwände (26) hindurch in die angrenzenden die Zuglösung (20) führenden Strömungskanäle (22) gelangt,
**dadurch gekennzeichnet,**
**dass** die Produktgewinnungseinrichtung (28) eine von aus der Vorwärtsosmoseeinrichtung (16) austretender verdünnter Zuglösung (20') durchströmte beheizte Desorberstufe (56) aufweist, die wenigstens einen Gasraum (58) sowie wenigstens einen die verdünnte Zuglösung (20') führenden Strömungskanal (22) umfasst, wobei ein
jeweiliger Gasraum (58) zumindest teilweise durch eine dampfdurchlässige flüssigkeitsdichte Membranwand (38) begrenzt ist und wenigstens ein zwischen einem solchen Gasraum (58) und einer an diesen angrenzenden Heizeinheit (32) gebildeter die verdünnte Zuglösung (20') führender Strömungskanal (22) vorgesehen ist, so dass aus der verdünnten Zuglösung (20') ausgetriebenes Gasgemisch (60) durch die Membranwand (38) hindurch in den Gasraum (58) gelangt und das Produkt (14) vorzugsweise in Form von aus der beheizten Desorberstufe (56) austretender vom Gasgemisch (60) gereinigter Zuglösung (120) abführbar ist,
**dass** das in der beheizten Desorberstufe (56) anfallende Gasgemisch (60) zur Erzeugung regenerierter Zuglösung (20) einer kombinierten Absorber-/Lösungskühlerstufe (62) zugeführt ist, wobei die durch diese Absorber-/Lösungskühlerstufe (62) erhaltene regenerierte Zuglösung (20) vorzugsweise wieder der Vorwärtsosmoseeinrichtung (16) zugeführt ist,
**dass** die Zuglösung (20) eine Lösung ist, die sich über den Dampfdruck sowohl trennen als auch regenerieren lässt, und
**dass** die Absorber-/Lösungskühlerstufe (62) wenigstens einen vorzugsweise mit Unterdruck beaufschlagten, Gasgemisch (60) aus der beheizten Desorberstufe (56) erhaltenden Gasraum (58) sowie wenigstens einen die gereinigte oder verdünnte Zuglösung (120 bzw. 20') führenden Strömungskanal (22) umfasst, wobei ein jeweiliger Gasraum (58) zumindest teilweise durch eine dampfdurchlässige flüssigkeitsdichte Membranwand (38) begrenzt ist und wenigstens ein zwischen einem solchen Gasraum (58) und einer an diesen angrenzenden Kühleinheit (52) gebildeter die Zuglösung (20') führender Strömungskanal (22) vorgesehen ist, so dass das Gasgemisch aus dem Gasraum (58) durch die Membranwand (38) hindurch in den die gereinigte oder verdünnte Zuglösung (120 bzw. 20') führenden Strömungskanal (22) strömt und in der durch die Kühleinheit (52) gekühlten gereinigten bzw. verdünnten Zuglösung (120 bzw. 20') aufgelöst wird.

2. System nach Anspruch 1,
**dadurch gekennzeichnet,**
**dass** die Zuglösung (20) die Vorwärtsosmoseeinrichtung (16) im Gegenstrom zur aufzuarbeitenden Lösung (12) durchströmt.

3. System nach Anspruch 1 oder 2,
**dadurch gekennzeichnet,**
**dass** die Vorwärtsosmoseeinrichtung (16) mehrere zueinander parallele die aufzuarbeitende Lösung (12) führende Strömungskanäle (18) sowie mehrere zueinander parallele die Zuglösung (20) führende Strömungskanäle (22) umfasst.

4. System nach Anspruch 3,
**dadurch gekennzeichnet,**
**dass** die die Zuglösung (20) führenden Strömungskanäle (22) jeweils auf einander gegenüberliegenden Seiten durch Membranwände (26) begrenzt sind, die zwei benachbarten die aufzuarbeitende Lösung (12) führenden Strömungskanälen (18) zugeordnet sind.

5. System nach einem der vorhergehenden Ansprüche,
**dadurch gekennzeichnet,**
**dass** eine jeweilige Heizeinheit (32) einen zumindest teilweise von einer fluiddichten wärmeleitenden Wand (34) begrenzten Heizfluidraum (36) umfasst.

6. System nach einem der vorhergehenden Ansprüche
**dadurch gekennzeichnet,**
**dass** der kombinierten Absorber-/Lösungskühlerstufe (62) zudem ein Teil der aus der beheizten Desorberstufe (56) austretenden gereinigten Zuglösung (120) oder ein Teil der aus der Vorwärtsosmoseeinrichtung (16) austretenden verdünnten Zuglösung (20') zugeführt ist, wobei im letzteren Fall von der aus der Vorwärtsosmoseeinrichtung (16) austretenden verdünnten Zuglösung (20') der beheizten Desorberstufe (56) vorzugsweise nur eine solche Teilmenge zugeführt ist, um die sich die Masse der aufkonzentrierten Zuglösung (20) beim Durchströmen der Vorwärtsosmoseeinrichtung (16) vergrößert hat, während die restliche Teilmenge verdünnter Zuglösung (20') der kombinierten Absorber-/ Lösungskühlerstufe (62) zugeführt ist.

7. System nach einem der vorhergehenden Ansprüche,
**dadurch gekennzeichnet,**
**dass** zur Versorgung der Absorber-/Lösungskühlerstufe (62) bzw. deren Kühleinheiten (52) mit Kühlfluid (64) eine Einrichtung (66) zum Trocknen und Kühlen von Gas (68), insbesondere Luft, mittels einer hygroskopischen Lösung (70) vorgesehen ist.

8. System nach Anspruch 7,
**dadurch gekennzeichnet,**
**dass** die Gastrocknungs-/Kühleinrichtung (66) eine Gaskühler-/Absorberstufe (72) aufweist, die wenigstens einen Gasströmungskanal (74) sowie wenigstens einen die hygroskopische Lösung (70) führenden Strömungskanal (76) umfasst, wobei der Innen- oder Gasraum (78) eines jeweiligen Gasströmungskanals (74) zumindest teilweise durch eine dampfdurchlässige flüssigkeitsdichte Membranwand (38) begrenzt ist und wenigstens ein zwischen einem solchen Gasströmungskanal (74) und einem an diesen angrenzenden weiteren solchen Gasströmungskanal (74) oder einer angrenzenden Kühleinheit gebildeter, die hygroskopische Lösung (70) führender Strömungskanal (76) vorgesehen ist, so dass Feuchtigkeit, insbesondere Wasserdampf, aus dem Gas (68) über die Membranwand (38) in die hygroskopische Lösung (70) übergeht und in dieser absorbiert wird.

9. System nach Anspruch 8,
**dadurch gekennzeichnet,**
**dass** die Gaskühler-/Absorberstufe (72) mehrere zueinander parallele Gasströmungskanäle (74) sowie mehrere zueinander parallele die hygroskopische Lösung (70) führende Strömungskanäle (76) umfasst.

10. System nach Anspruch 9,
**dadurch gekennzeichnet,**
**dass** die die hygroskopische Lösung (70) führenden Strömungskanäle (76) der Gaskühler-/Absorberstufe (72) jeweils zwischen zwei aneinandergrenzenden Gasströmungskanälen (74) gebildet sind.

11. System nach Anspruch 9,
**dadurch gekennzeichnet,**
**dass** die die hygroskopische Lösung (70) führenden Strömungskanäle (76) der Gaskühler-/Absorberstufe (72) jeweils zwischen einem Gasströmungskanal (74) und einer angrenzenden Kühleinheit gebildet sind.

12. System nach einem der vorhergehenden Ansprüche,
**dadurch gekennzeichnet,**
**dass** die aus der Gaskühler-/Absorberstufe (72) austretende hygroskopische Lösung (70) einer Regenerationsstufe (80) zugeführt ist, in der sie regeneriert wird, und vorzugsweise die regenerierte hygroskopische Lösung (70) insbesondere über einen Kühler (82) wieder der Gaskühler-/Absorberstufe (72) zugeführt ist.

13. System nach Anspruch 12,
**dadurch gekennzeichnet,**
**dass** die Regenerationsstufe (80) wenigstens einen insbesondere von Umgebungsluft durchströmten Gasströmungskanal (74) sowie wenigstens einen die hygroskopische Lösung (70) führenden Strömungskanal (76) umfasst, wobei der Innen- oder Gasraum (78) eines jeweiligen Gasströmungskanals (74) zumindest teilweise durch eine dampfdurchlässige flüssigkeitsdichte Membranwand (38) begrenzt ist und wenigstens ein zwischen einem solchen Gasströmungskanal (74) und einem an diesen angrenzenden weiteren solchen Gasströmungskanal (74) gebildeter, die hygroskopische Lösung (70) führender Strömungskanal (76) vorgesehen ist, so dass Feuchtigkeit, insbesondere Wasserdampf, aus der hygroskopischen Lösung (70) über die Membranwand (38) in das in dem Gasströmungskanals (74) geführte Gas, insbesondere Umgebungsluft, übergeht und die hygroskopische Lösung (70) aufkonzentriert wird.

14. System nach Anspruch 13,
**dadurch gekennzeichnet,**
**dass** die Regenerationsstufe (80) mehrere zueinander parallele Gasströmungskanäle (78) sowie mehrere zueinander parallele die hygroskopische Lösung (70) führende Strömungskanäle (76) umfasst, wobei vorzugsweise die die hygroskopische Lösung (70) führenden Strömungskanäle (76) der Regenerationsstufe (80) jeweils zwischen
zwei aneinandergrenzenden Gasströmungskanälen (74) gebildet sind.

15. System nach Anspruch 12,
**dadurch gekennzeichnet,**
**dass** die zur Regeneration der hygroskopischen Lösung (70) vorgesehene Regenerationsstufe (80) eine von der aus der Gaskühler-/Absorberstufe (72) austretenden hygroskopischen Lösung (70) durchströmte Heizstufe (30) aufweist, die wenigstens eine Heizeinheit (32) und wenigstens eine Verdampfereinheit (V) umfasst, wobei eine jeweilige Heizeinheit (32) einen zumindest teilweise von einer fluiddichten wärmeleitenden Wand (34) begrenzten Heizfluidraum (36) und eine jeweilige Verdampfereinheit (V) einen zumindest teilweise durch eine dampfdurchlässige flüssigkeitsdichte Membranwand (38) begrenzten Dampfraum (40) umfasst, und in der Heizstufe (30) wenigstens ein zwischen einer Heizeinheit (32) und einer an diese angrenzenden Verdampfereinheit (V) gebildeter, die hygroskopische Lösung (70) führender Strömungskanal (76) vorgesehen ist, so dass die hygroskopische Lösung (70) über die fluiddichte wärmeleitende Wand (34) beheizt wird und der aus der hygroskopischen Lösung (70) entstehende Dampf durch die Membranwand (38) hindurch in den Dampfraum (40) gelangt.

16. System nach Anspruch 15,
**dadurch gekennzeichnet,**
**dass** die Regenerationsstufe (80) wenigstens eine von der aus der Heizstufe (30) austretenden hygroskopischen Lösung (70) durchströmte, mit in der Heizstufe (30) anfallendem Dampf (92) versorgte Kondensations-/Verdampfungsstufe (42) aufweist, die wenigstens eine Kondensationseinheit (K) und wenigstens eine Verdampfereinheit (V) umfasst, wobei eine jeweilige Kondensationseinheit (K) einen zumindest teilweise von einer Kondensationswand (44) begrenzten ersten Dampfraum (46) und eine jeweilige Verdampfereinheit (V) einen zumindest teilweise durch eine dampfdurchlässige flüssigkeitsdichte Membranwand (38) begrenzten zweiten Dampfraum (48) umfasst, und in einer jeweiligen Kondensations-/Verdampfungsstufe (42) wenigstens ein zwischen einer solchen Kondensationseinheit (K) und einer solchen an diese angrenzenden Verdampfereinheit (V) gebildeter, die hygroskopische Lösung (70) führender Strömungskanal (77) vorgesehen ist, so dass die hygroskopische Lösung (70) über die Kondensationswand (44) erhitzt wird und der aus der hygroskopischen Lösung (70) entstehende Dampf durch die Membranwand (38) hindurch in den zweiten Dampfraum (48) gelangt, wobei vorzugsweise die aus der letzten Kondensations-/Verdampfungsstufe (42) austretende hygroskopische Lösung (70) wieder der Gaskühler-/Absorberstufe (72) zugeführt ist.

17. System nach Anspruch 15 oder 16,
**dadurch gekennzeichnet,**
**dass** die Regenerationsstufe (80) eine Kondensationsstufe (50) mit wenigstens einer Kühleinheit (52) und wenigstens einer Kondensationseinheit (K) umfasst, wobei eine jeweilige Kühleinheit (52) einen vorzugsweise zumindest teilweise von einer fluiddichten wärmeleitenden Wand (34) begrenzten Kühlfluidraum (54) und eine jeweilige Kondensationseinheit (K) einen zumindest teilweise von einer Kondensationswand (44) begrenzten Dampfraum (46) umfasst und in der Kondensationsstufe (50) wenigstens eine Kühleinheit (52) zumindest einer Kondensationseinheit (K) benachbart ist, so dass die Kondensationswand (44) der jeweiligen Kondensationseinheit (K) über die Kühleinheit (52) gekühlt wird, und wobei der Kondensationsstufe (50) vorzugsweise in einer vorangehenden Kondensations-/Verdampfungsstufe (42) entstehender Dampf zugeführt ist.

18. System nach einem der vorhergehenden Ansprüche,
**dadurch gekennzeichnet,**
**dass** es als modulares Strömungssystem mit einer Vielzahl von Rahmenelementen ausgeführt ist und die verschiedenen Funktionseinheiten wie insbesondere ein jeweiliger die aufzuarbeitende Lösung (12) führender Strömungskanal (18), eine jeweilige Heizeinheit (32), eine jeweilige Verdampfereinheit (V), eine jeweilige Kondensationseinheit (K), eine jeweilige Kühleinheit (52), ein jeweiliger Gasraum (58) und/oder ein jeweiliger Gasströmungskanal (74) jeweils in Form eines solchen Rahmenelements vorgesehen sind, wobei die Rahmenelemente vorzugsweise mit Stegstrukturen (84) versehen sind, über die sie insbesondere zur Bildung der Vorwärtsosmoseeinrichtung (16), einer jeweiligen Heizstufe (30), einer jeweiligen Kondensations-/Verdampfungsstufe (42), einer jeweiligen Kondensationsstufe (50), der beheizten Desorberstufe (56), der kombinierten Absorber-/Lösungskühlerstufe (62), der Gaskühler-/Absorberstufe (72) und/oder der zur Regeneration der hygroskopischen Lösung (70) vorgesehenen Regenerationsstufe (80) miteinander verbindbar sind, und jeweils einen von einem äußeren Rahmen (86) umschlossenen Innenbereich (88) umfassen, der vorzugsweise mit einem insbesondere gitterartigen Abstandshalter (90) versehen ist, auf dessen beiden Seiten zur Bildung eines jeweiligen Innenraums (24), eines jeweiligen Heizfluidraums (36), eines jeweiligen Dampfraums (40, 46, 48), eines jeweiligen Kühlfluidraums (54), eines jeweiligen Gasraums (58) oder eines jeweiligen Innen- oder Gasraums (78) insbesondere jeweils eine entsprechende Funktionsfläche, vorzugsweise in Form einer Folie oder Membran, aufgebracht ist.

## Claims

1. A system (10) for separating a product (14) contained as a solvent in a solution (12) to be processed, having at least one forward osmosis device (16) flowed through by the solution (12) to be processed and by a draw solution (20) and having a device (28) connected downstream thereof for recovering the product (14) from diluted draw solution (20') exiting the forward osmosis device (16), wherein the forward osmosis device (16) comprises at least one flow passage (18) conducting the solution (12) to be processed and at least one flow passage (22) conducting the draw solution (20), wherein the inner space (24) of a respective flow passage (18) conducting the solution (12) to be processed is at least partly bounded by a semipermeable membrane wall (26) which is permeable for the solvent of the solution (12) to be processed, but not for the substance dissolved therein, and wherein at least one flow passage (22) conducting the draw solution (20) is bounded on mutually oppositely disposed sides by membrane walls (26) which are associated with two adjacent flow passages (18) conducting the solution (12) to be processed such that solvent from the solution (12) to be processed arrives in the adjacent flow passages (22) conducting the draw solution (20) through the membrane walls (26),
**characterized in that**
the product recovery device (28) has a heated desorber stage (56) which is flowed through by diluted draw solution (20') exiting the forward osmosis device (16) and which comprises at least one gas space (58) as well as at least one flow passage (22) conducting the diluted draw solution (20'), wherein a respective gas space (58) is at least partly bounded by a vapor-permeable, liquid-tight membrane wall (38) and wherein at least one flow passage (22) is provided which is formed between such a gas space (58) and a heating unit (32) adjacent thereto and which conducts the diluted draw solution (20') such that gas mixture (60) expelled from the diluted draw solution (20') arrives in the gas space (58) through the membrane wall (38) and the product (14) can preferably be led off in the form of draw solution (120) exiting the heated desorber stage (56) and purified of the gas mixture (60);
**in that** the gas mixture (60) arising in the heated desorber stage (56) is supplied to a combined absorber/solution cooler stage (62) for generating regenerated draw solution (20), wherein the regenerated draw solution (20) obtained through this absorber/solution cooler stage (62) is preferably again supplied to the forward osmosis device (16);
**in that** the draw solution (20) is a solution which can be both separated and regenerated via the vapor pressure; and
**in that** the absorber/solution cooler stage (62) comprises at least one gas space (58) which is preferably acted on by vacuum and contains gas mixture (60) from the heated desorber stage (56) as well as at least one flow passage (22) conducting the purified or diluted draw solution (120 or 20'), wherein a respective gas space (58) is at least partly bounded by a vapor-permeable, liquid-tight membrane wall (38) and wherein at least one flow passage (22) is provided which is formed between such a gas space (58) and a cooling unit (52) adjacent thereto and which conducts the draw solution (20') such that the gas mixture flows from the gas space (58) through the membrane wall (38) into the flow passage (22) conducting the purified or diluted draw solution (120 or 20') and is dissolved in the purified or diluted draw solution (120 or 20') cooled by the cooling unit (52).

2. A system in accordance with claim 1,
**characterized in that**
the draw solution (20) flows through the forward osmosis device (16) in counter-flow to the solution (12) to be processed.

3. A system in accordance with claim 1 or claim 2,
**characterized in that**
the forward osmosis device (16) comprises a plurality of flow passages (18) in parallel with one another and conducting the solution (12) to be processed as well as a plurality of flow passages (22) in parallel with one another and conducting the draw solution (20).

4. A system in accordance with claim 3,
**characterized in that**
the flow passages (22) conducting the draw solution (20) are each bounded on mutually oppositely disposed sides by membrane walls (26) which are associated with two adjacent flow passages (18) conducting the solution (12) to be processed.

5. A system in accordance with any one of the preceding claims,
**characterized in that**
a respective heating unit (32) comprises a heating fluid space (36) at least partly bounded by a fluid-tight, heat-conducting wall (34).

6. A system in accordance with any one of the preceding claims,
**characterized in that**
some of the purified draw solution (120) exiting the heated desorber stage (56) or some of the diluted draw solution (20') exiting the forward osmosis device (16) is moreover supplied to the combined absorber/solution cooler stage (62), wherein in the latter case preferably only such a part quantity of the diluted draw solution (20') exiting the forward osmosis device (16) is supplied to the heated desorber stage (56) by which the mass of the concentrated draw solution (20) increased on flowing through the forward osmosis device (16) while the remaining part quantity of diluted draw solution (20') is supplied to the combined absorber/solution cooler stage (62).

7. A system in accordance with any one of the preceding claims,
**characterized in that**
a device (66) for drying and cooling gas (68), in particular air, by means of a hygroscopic solution (70) is provided for supplying the absorber/ solution cooler stage (62) or its cooling units (52) with cooling fluid (64).

8. A system in accordance with claim 7,
**characterized in that**
the gas drying/cooling device (66) has a gas cooler/absorber stage (72) which comprises at least one gas flow passage (74) as well as at least one flow passage (76) conducting the hygroscopic solution (70), wherein the inner space or gas space (78) of a respective gas flow passage (74) is bounded at least partly by a vapor-permeable, liquid tight membrane wall (38) and at least one flow passage (76) is provided which is formed between such a gas flow passage (74) and a further such gas flow passage (74) adjacent thereto or an adjacent cooling unit and which conducts the hygroscopic solution (70) such that moisture, in particular water vapor, is transferred into the hygroscopic solution (70) from the gas (68) via the membrane wall (38) and is absorbed therein.

9. A system in accordance with claim 8,
**characterized in that**
the gas cooler/absorber stage (72) comprises a plurality of gas flow passages (74) in parallel with one another as well as a plurality of flow passages (76) in parallel with one another and conducting the hygroscopic solution (70).

10. A system in accordance with claim 9,
**characterized in that**
the flow passages (76) of the gas cooler/absorber stage (72) conducting the hygroscopic solution (70) are respectively formed between two mutually adjacent gas flow passages (74).

11. A system in accordance with claim 9,
**characterized in that**
the flow passages (76) of the gas cooler/absorber stage (72) conducting the hygroscopic solution (70) are respectively formed between a gas flow passage (74) and an adjacent cooling unit.

12. A system in accordance with any one of the preceding claims,
**characterized in that**
the hygroscopic solution (70) exiting the gas cooler/absorber stage (72) is supplied to a regeneration stage (80) in which it is regenerated, and the regenerated hygroscopic solution (70) is in particular again preferably supplied to the gas cooler/absorber stage (72) via a cooler (82).

13. A system in accordance with claim 12,
**characterized in that**
the regeneration stage (80) comprises at least one gas flow passage (74), which is in particular flowed through by environmental air, as well as at least one flow passage (76) which conducts the hygroscopic solution (70), wherein the inner space or gas space (78) of a respective gas flow passage (74) is at least partly bounded by a vapor-permeable, liquid-tight membrane wall (38) and wherein at least one flow passage (76) is provided which is formed between such a gas flow passage (74) and a further such gas flow passage (74) adjacent thereto and which conducts the hygroscopic solution (70) such that moisture, in particular water vapor, is transferred from the hygroscopic solution (70) via the membrane wall (38) into the gas, in particular environmental air, conducted in the gas flow passage (74) and the hygroscopic solution (70) is concentrated.

14. A system in accordance with claim 13,
**characterized in that**
the regeneration stage (80) comprises a plurality of gas flow passages (78) in parallel with one another as well as a plurality of flow passages (76) in parallel with one another and conducting the hygroscopic solution (70), wherein the flow passages (76) of the regeneration stage (80) preferably conducting the hygroscopic solution (70) are each formed between two mutually adjacent gas flow passages (74).

15. A system in accordance with claim 12,
**characterized in that**
the regeneration stage (80) provided for regenerating the hygroscopic solution (70) has a heating stage (30) which is flowed through by the hygroscopic solution (70) exiting the gas cooler/absorber stage (72) and which comprises at least one heating unit (32) and at least one evaporator unit (V), wherein a respective heating unit (32) comprises a heating fluid space (36) at least partly bounded by a fluid-tight, heat-conducting wall (34) and a respective evaporator unit (V) comprises a vapor space (40) at least partly bounded by a vapor-permeable, liquid-tight membrane wall (38), and wherein at least one flow passage (76), which is formed between a heating unit (32) and an evaporator unit (V) adjacent thereto and which conducts the hygroscopic solution (70), is provided in the heating stage (30) such that the hygroscopic solution (70) is heated via the fluid-tight, heat-conducting wall (34) and the vapor arising from the hygroscopic solution (70) arrives in the vapor space (40) through the membrane wall (38).

16. A system in accordance with claim 15,
**characterized in that**
the regeneration stage (80) has at least one condensation/evaporation stage (42) which is flowed through by the hygroscopic solution (70) exiting the heating stage (30), which is supplied with vapor (92) arising in the heating stage (30) and which comprises at least one condensation unit (K) and at least one evaporator unit (V), wherein a respective condensation unit (K) comprises a first vapor space (46) at least partly bounded by a condensation wall (44) and a respective evaporator unit (V) comprises a second vapor space (48) at least partly bounded by a vapor-permeable, liquid-tight membrane wall (38), and wherein at least one flow passage (77), which is formed between such a condensation unit (K) and such an evaporator unit (V) adjacent thereto and which conducts the hygroscopic solution (70), is provided in a respective condensation/evaporation stage (42) such that the hygroscopic solution (70) is heated via the condensation wall (44) and the vapor arising from the hygroscopic solution (70) arrives in the second vapor space (48) through the membrane wall (38), with preferably the hygroscopic solution (70) exiting the last condensation/evaporation stage (42) again being supplied to the gas cooler/absorber stage (72).

17. A system in accordance with claim 15 or claim 16,
**characterized in that**
the regeneration stage (80) comprises a condensation stage (50) having at least one cooling unit (52) and at least one condensation unit (K), wherein a respective cooling unit (52) comprises a cooling fluid space (54) preferably at least partly bounded by a fluid-tight, heat-conducting wall (34) and a respective condensation unit (K) comprises a vapor space (46) at least partly bounded by a condensation wall (44) and wherein at least one cooling unit (52) is adjacent to at least one condensation unit (K) in the condensation stage (50) such that the condensation wall (44) of the respective condensation unit (K) is cooled via the cooling unit (52), and wherein vapor preferably arising in a preceding condensation/evaporator stage (42) is supplied to the condensation stage (50).

18. A system in accordance with any one of the preceding claims,
**characterized in that**
it is configured as a modular flow system having a plurality of frame elements and the different functional units such as in particular a respective flow passage (18) conducting the solution (12) to be processed, a respective heating unit (32), a respective evaporator unit (V), a respective condensation unit (K), a respective cooling unit (52), a respective gas space (58) and/or a respective gas flow passage (74) are each provided in the form of such a frame element, wherein the frame elements are preferably provided with web structures (84) via which they can in particular be connected to one another for forming the forward osmosis device (16), a respective heating stage (30), a respective condensation/evaporation stage (42), a respective condensation stage (50), the heated desorber stage (56), the combined absorber/solution cooler stage (62), the gas cooler/absorber stage (72) and/or the regeneration stage (80) provided for regenerating the hygroscopic solution (70), and each comprise an inner region (88) which is surrounded by an outer frame (86) and which is preferably provided with an in particular grid-like spacer (90) to whose both sides in particular a respective corresponding functional surface is applied, preferably in the form of a film or membrane, for forming a respective inner space (24), a respective heating fluid space (36), a respective vapor space (40, 46, 48), a respective cooling fluid space (54), a respective gas space (58) or a respective inner space or gas space (78).

## Revendications

1. Système (10) pour la séparation d'un produit (14) contenu à titre de solvant dans une solution à traiter (12), comprenant au moins un système à osmose directe (16) traversé par la solution à traiter (12) et par une solution d'extraction (20), et un système (28) agencé à la suite de celui-ci pour la récupération du produit (14) hors de la solution d'extraction (20') diluée sortant du système à osmose directe (16), dans lequel le système à osmose directe (16) comprend au moins un canal d'écoulement (18) qui mène la solution à traiter (12) et au moins un canal d'écoulement (22) qui mène la solution d'extraction (20), l'espace intérieur (24) d'un canal d'écoulement respectif (18) qui mène la solution à traiter (12) est au moins partiellement délimité par une paroi à membrane semiperméable (26) perméable pour le solvant de la solution à traiter (12) mais non pas pour l'agent en solution dans celle-ci, et au moins un canal d'écoulement (22) qui mène la solution d'extraction (20) est délimité sur des côtés mutuellement opposés par des parois à membrane (26) qui sont associées à deux canaux d'écoulement voisins (18) qui mènent la solution à traiter (12), de sorte que le solvant provenant de la solution à traiter (12) parvient, en traversant les parois à membrane (26), jusque dans les canaux d'écoulement adjacents (22) qui mènent la solution d'extraction, **caractérisé en ce que**
le système de récupération de produit (28) comprend un étage de désorption chauffé (56) traversé par la solution d'extraction (20') diluée sortant du système à osmose directe (16), étage qui inclut au moins un volume à gaz (58) ainsi qu'au moins un canal d'écoulement (22) qui mène la solution d'extraction diluée (20'), dans lequel un volume à gaz respectif (58) est délimité au moins partiellement par une paroi à membrane (38) perméable à la vapeur et étanche aux liquides, et il est prévu au moins un canal d'écoulement (22) formé entre un tel volume à gaz (58) et une unité de chauffage (32) adjacente à celui-ci, qui mène la solution d'extraction diluée (20'), de sorte qu'un mélange de gaz (60) chassé hors de la solution d'extraction diluée (20') à travers la paroi à membrane (32) parvient dans le volume à gaz (58), et le produit (14) peut être évacué, de préférence sous la forme de solution d'extraction (120) sortant de l'étage de désorption chauffé (56) et débarrassée du mélange de gaz (60),
**en ce que** le mélange de gaz (60) engendré dans l'étage de désorption chauffé (56) est admis à un étage combiné d'absorption et de refroidissement de solution (62) pour engendrer une solution d'extraction régénérée (20), dans lequel la solution d'extraction régénérée (20) obtenue au moyen de cet étage d'absorption et de refroidissement de solution est de préférence un nouveau admis au système à osmose directe (16),
**en ce que** la solution d'extraction (20) est une solution qui peut être aussi bien séparée que régénérée au moyen de vapeur sous pression, et **en ce que** l'étage d'absorption et de refroidissement de solution (62) inclut un volume à gaz (58) de préférence soumis à dépression et recevant le mélange de gaz (60) provenant de l'étage de désorption chauffé (56), et au moins un canal d'écoulement (22) qui mène la solution d'extraction purifiée ou diluée (120 ; 20'), dans lequel un volume à gaz respectif (58) est délimité au moins partiellement par une paroi à membrane (38) perméable à la vapeur et étanche aux liquides, et il est prévu au moins un canal d'écoulement (22) formé entre un tel volume à gaz (58) et une unité de refroidissement (52) adjacente à celui-ci, qui mène la solution d'extraction (20'), de sorte que le mélange de gaz provenant du volume à gaz (58) s'écoule à travers la paroi à membrane (38) jusque dans le canal d'écoulement (22) qui mène la solution d'extraction purifiée ou diluée (120 ; 20') et est dissous dans la solution d'extraction purifiée ou diluée (120 ; 20') refroidie à travers l'unité de refroidissement (52).

2. Système selon la revendication 1,
**caractérisé en ce que** la solution d'extraction (20) traverse le système à osmose directe (16) à contre-courant par rapport à la solution à traiter (12).

3. Système selon la revendication 1 ou 2,
**caractérisé en ce que** le système à osmose directe (16) inclut plusieurs canaux d'écoulement (18) parallèles les uns aux autres et menant la solution à traiter (12), ainsi que plusieurs canaux d'écoulement (22) parallèles les uns aux autres et menant la solution d'extraction (20).

4. Système selon la revendication 3,
**caractérisé en ce que** les canaux d'écoulement (22) qui mènent la solution d'extraction (20) sont respectivement délimités sur des côtés mutuellement opposés par des parois à membrane (26), qui sont associées à deux canaux d'écoulement voisins (18) qui mènent la solution à traiter (12).

5. Système selon l'une des revendications précédentes,
**caractérisé en ce qu'**une unité de chauffage respective (32) inclut un espace à fluide chauffant (36) au moins partiellement délimité par une paroi (34) étanche aux fluides et thermoconductrice.

6. Système selon l'une des revendications précédentes,
**caractérisé en ce qu'**en outre une partie de la solution d'extraction (120) purifiée sortant de l'étage de désorption chauffé (56) ou bien une partie de la solution d'extraction (20') diluée sortant du système à osmose directe (16) est admise à l'étage combiné d'absorption et de refroidissement de solution (62), et dans ce dernier cas de préférence la solution d'extraction (20') sortant du système à osmose directe (16) est admise à l'étage de désorption chauffée (56) seulement en une quantité partielle égale à l'augmentation de la masse de la solution d'extraction concentrée (20) lors de la traversée du système à osmose directe (16), alors que la quantité partielle restante de solution d'extraction diluée (20') est admise à l'étage combiné d'absorption et de refroidissement de solution (62).

7. Système selon l'une des revendications précédentes,
**caractérisé en ce que**, pour l'alimentation de l'étage d'absorption et de refroidissement de solution (62) ou respectivement de ses unités de refroidissement (52) avec un fluide de refroidissement (64), il est prévu un système (66) pour sécher et refroidir un gaz (68), en particulier de l'air, au moyen d'une solution hygroscopique (70).

8. Système selon la revendication 7,
**caractérisé en ce que** le système de séchage et de refroidissement de gaz (66) comprend un étage de refroidissement de gaz et d'absorption (72) qui comprend au moins un canal d'écoulement de gaz (74) ainsi qu'au moins un canal d'écoulement (76) qui mène la solution hygroscopique (70), dans lequel le volume intérieur ou volume à gaz (78) d'un canal d'écoulement de gaz (74) respectif et délimité au moins partiellement par une paroi à membrane (38) perméable à la vapeur et étanche aux liquides, et il est prévu au moins un canal d'écoulement (76), formé entre un tel canal d'écoulement de gaz (74) et un autre canal d'écoulement de gaz (74) de ce type et adjacent à celui-ci ou une unité de refroidissement adjacente, qui mène la solution hygroscopique (70), de sorte que de l'humidité, en particulier de la vapeur d'eau, est transférée hors du gaz (68) via la paroi à membrane (38) jusque dans la solution hygroscopique (70) et absorbée dans celle-ci.

9. Système selon la revendication 8,
**caractérisé en ce que** l'étage de refroidissement de gaz et d'absorption (72) inclut plusieurs canaux d'écoulement de gaz (74) mutuellement parallèles ainsi que plusieurs canaux d'écoulement (76) mutuellement parallèles, qui mènent la solution hygroscopique (70).

10. Système selon la revendication 9,
**caractérisé en ce que** les canaux d'écoulement (76), qui mènent la solution hygroscopique (70), de l'étage de refroidissement de gaz et d'absorption (72) sont formés respectivement entre deux canaux d'écoulement de gaz (74) mutuellement adjacents.

11. Système selon la revendication 9,
**caractérisé en ce que** les canaux d'écoulement (76), qui mènent la solution hygroscopique (70), de l'étage de refroidissement de gaz et d'absorption (72), sont respectivement formés entre un canal d'écoulement de gaz (74) et une unité de refroidissement adjacente.

12. Système selon l'une des revendications précédentes,
**caractérisé en ce que** la solution hygroscopique (70) qui sort de l'étage de refroidissement de gaz et d'absorption (72) est admise à un étage de régénération (80) dans lequel elle est régénérée et la solution hygroscopique régénérée (70) est de préférence à nouveau admise à l'étage de refroidissement de gaz et d'absorption (72), en particulier via un dispositif de refroidissement (82).

13. Système selon la revendication 12,
**caractérisé en ce que** l'étage de régénération (80) inclut au moins un canal d'écoulement de gaz (74) traversé en particulier par l'air environnant, ainsi qu'au moins un canal d'écoulement (76) qui mène la solution hygroscopique (70), dans lequel le volume intérieur ou volume à gaz (78) d'un canal d'écoulement de gaz respectif (74) est délimité au moins partiellement par une paroi à membrane (38) perméable à la vapeur et étanche aux fluides, et il est prévu au moins un canal d'écoulement (76), formé entre un tel canal d'écoulement de gaz (74) et un autre canal d'écoulement de gaz (74) de ce type, adjacent au premier, qui mène la solution hygroscopique (70), de sorte que de l'humidité, en particulier de la vapeur d'eau, est transférée depuis la solution hygroscopique (70) via la paroi à membrane (38) jusque dans le gaz mené dans le canal d'écoulement de gaz (74), en particulier de l'air environnant, et la solution hygroscopique (70) est concentrée.

14. Système selon la revendication 13,
**caractérisé en ce que** l'étage de régénération (80) inclut plusieurs canaux d'écoulement de gaz (78) mutuellement parallèles ainsi que plusieurs canaux d'écoulement (76) mutuellement parallèles et menant la solution hygroscopique (70), et dans lequel de préférence les canaux d'écoulement (76) qui mènent la solution hygroscopique (70) à l'étage de régénération (80) sont formés respectivement entre deux canaux d'écoulement de gaz (74) adjacents.

15. Système selon la revendication 12,
**caractérisé en ce que** l'étage de régénération (80) prévu pour la régénération de la solution hygroscopique (70) comprend un étage de chauffage (30) traversé par la solution hygroscopique sortant de l'étage de refroidissement de gaz et d'absorption (72), qui inclut au moins une unité de chauffage (32) et au moins une unité d'évaporation (V), dans lequel une unité de chauffage respective (32) comprend une chambre à fluide de chauffage (36) délimitée au moins partiellement par une paroi étanche aux fluides (34) et thermoconductrice, et une unité d'évaporation respective (V) comprend une chambre à vapeur (40) délimitée au moins partiellement par une paroi à membrane (38) perméable à la vapeur et étanche aux fluides, et dans l'étage de chauffage (30) il est prévu au moins un canal d'écoulement (76), formé entre une unité de chauffage (32) et une unité d'évaporation (V) adjacente à celle-ci, qui mène la solution hygroscopique (76), de sorte que la solution hygroscopique (70) est chauffée via la paroi étanche aux fluides (34) et thermoconductrice, et la vapeur qui émane de la solution hygroscopique (70) parvient dans la chambre à vapeur (40) en traversant la paroi à membrane (38).

16. Système selon la revendication 15,
**caractérisé en ce que** l'étage de régénération (80) comprend au moins un étage de condensation/évaporation (42) traversé par la solution hygroscopique (70) qui sort de l'étage de chauffage (30) et qui est alimenté avec de la vapeur (92) générée dans l'étage de chauffage (30), qui inclut une unité de condensation (K) et au moins une unité d'évaporation (V), dans lequel une unité de condensation respective (K) comprend une première chambre à vapeur (46) délimitée au moins partiellement par une paroi de condensation (44) et une unité d'évaporation respective (V) comprend une seconde chambre à vapeur (48) délimitée par une paroi à membrane (38) perméable à la vapeur et étanche aux fluides, et dans un étage de condensation/évaporation respectif (42) il est prévu au moins un canal d'écoulement (77), formé entre une telle unité de condensation (K) et une telle unité d'évaporation (V) adjacente à celle-ci, qui mène la solution hygroscopique (70), de sorte que la solution hygroscopique (70) est réchauffée via la paroi de condensation (44) et la vapeur générée à partir de la solution hygroscopique (70) parvient dans la seconde chambre à vapeur (48) en traversant la paroi à membrane (38), et de préférence la solution hygroscopique (70) qui sort du dernier étage de condensation/évaporation (42) est ramenée à nouveau dans l'étage de refroidissement de gaz et d'absorption (72).

17. Système selon la revendication 15 ou 16,
**caractérisé en ce que** l'étage de régénération (80) comprend un étage de condensation (50) avec au moins une unité de refroidissement (52) et au moins une unité de condensation (K), dans lequel une unité de refroidissement respective (52) comprend une chambre à fluide de refroidissement (54) délimitée de préférence au moins partiellement par une paroi (34) étanche aux fluides et thermoconductrice, et une unité de condensation respective (K) comprend une chambre à vapeur (46) délimitée au moins partiellement par une paroi de condensation (44) et, dans l'étage de condensation (50) au moins une unité de refroidissement (52) est voisine d'au moins une unité de condensation (K), de sorte que la paroi de condensation (44) de l'unité de condensation respective (K) est refroidie via l'unité de refroidissement (52), et dans lequel de la vapeur générée de préférence dans un étage de condensation/évaporation (42) précédent est amenée à l'étage de condensation (50).

18. Système selon l'une des revendications précédentes,
**caractérisé en ce qu'**il est réalisé sous forme de système d'écoulement modulaire avec une pluralité d'éléments formant cadre, et les diverses unités fonctionnelles, comme en particulier un canal d'écoulement respectif (18) qui mène la solution à traiter (12), une unité de chauffage respective (32), une unité d'évaporation respective (V), une unité de condensation respective (K), une unité de refroidissement respective (52), un volume à gaz respectif (58) et/ou un canal d'écoulement de gaz respectif (74) sont chacune prévues sous la forme d'un tel élément formant cadre, dans lequel les éléments formant cadre sont de préférence dotés de structures en barrettes (84) au moyen desquelles ils peuvent être reliés les uns aux autres en particulier pour la formation du système à osmose directe (16), d'un étage de chauffage respectif (30), d'un étage de condensation/évaporation respectif (42), d'un étage de condensation respectif (50), de l'étage de désorption chauffé (56), de l'étage combiné d'absorption et de refroidissement de solution (62), de l'étage de refroidissement de gaz et d'absorption (72) et/ou de l'étage de régénération (80) prévu pour la régénération de la solution hygroscopique (70), et comprennent chacune une zone intérieure (88) enfermée par un cadre extérieur (86), laquelle est de préférence dotée d'un élément d'écartement (90) en particulier semblable à une grille, sur les deux côtés de laquelle est appliquée en particulier une surface fonctionnelle correspondante respective, de préférence sous la forme d'un film ou d'une membrane, pour la réalisation d'une chambre intérieure respective (24), d'une chambre à fluide de chauffage respective (36), d'une chambre à vapeur respective (40, 46, 48), d'une chambre à fluide de refroidissement respective (54), d'un volume à gaz respectif (58) ou d'un volume intérieur ou volume à gaz respectif (78).
